(19)

**Europäisches Patentamt**

**European Patent Office**

**Office européen des brevets**

(11)  **EP 2 530 988 B1**

(12)  **EUROPEAN PATENT SPECIFICATION**

(45) Date of publication and mention
of the grant of the patent:
**16.09.2015   Bulletin 2015/38**

(51) Int Cl.:
*H04W 4/00* (2009.01)         *H04W 72/12* (2009.01)
*H04L 29/08* (2006.01)

(21) Application number: **11305685.7**

(22) Date of filing: **04.06.2011**

(54) **A scheduling concept**

Zeitplanungskonzept

Concept de programmation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.12.2012   Bulletin 2012/49**

(73) Proprietor: **ALCATEL LUCENT
92100 Boulogne-Billancourt (FR)**

(72) Inventors:
• **Valentin, Stefan
70378 Stuttgart (DE)**
• **Proebster, Magnus
72127 Kusterdingen (DE)**

• **Kaschub, Matthias
72813 St. Johan (DE)**

(74) Representative: **Wetzel, Emmanuelle et al
Alcatel Lucent
Intellectual Property & Standards
70430 Stuttgart (DE)**

(56) References cited:
**US-A1- 2007 159 993     US-A1- 2008 137 537**

• **GIUSEPPE BIANCHI ET AL: "A Programmable
MAC Framework for Utility-Based Adaptive
Quality of Service Support", IEEE JOURNAL ON
SELECTED AREAS IN COMMUNICATIONS, IEEE
SERVICE CENTER, PISCATAWAY, US, vol. 18,
no. 2, 1 February 2000 (2000-02-01),
XP011055075, ISSN: 0733-8716**

**Description**

Embodiments of the present invention relate to communication networks, more particularly but not exclusively to packet data transmission in mobile communication networks.

<u>Background</u>

Demands for higher data rates for mobile services are steadily increasing. At the same time modern mobile communication systems as 3rd generation systems (3G as abbreviation) and 4th generation systems (4G as abbreviation) provide enhanced technologies which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to feature phones, this application mix leads to a number of new characteristics. For example, highly dynamic load statistics result. Modern handhelds support various applications that generate bursty traffic, cf. G. Maier, F. Schneider, A. Feldmann. "A First Look at Mobile Hand-held Device Traffic", In Proc. Int. Conference on Passive and Active Network Measurement (PAM '10), April 2010. Even worse, with multitasking operation systems many of these applications run in parallel and a user may change this mix of active applications at any instant. Consequently, the generated load may change rapidly and high peaks can appear at any time.

Moreover, load statistics can be highly diverse. Even if an application mix remains static, the requested load may fundamentally differ among the applications. Consequently, there is now a larger spectrum of load requests to satisfy than with feature phones. Furthermore, dynamics of constraints have increased. Each application can have different requirements in error rate and delay, which may change when the application becomes inactive or the application mix changes. Consequently, guarantees granted to an UE (as abbreviation for User Equipment, in line with the 3GPP terminology, 3GPP abbreviating 3$^{rd}$ Generation Partnership Project) can become quickly obsolete.

These traffic characteristics make it challenging to efficiently allocate wireless channel resources to modern UEs while keeping an acceptable Quality of Service (QoS for abbreviation). First, the load statistics are now instable, difficult to characterize, and to predict, cf. F. Schneider, S. Agarwal, T. Alpcan, A. Feldmann. "The New Web: Characterizing AJAX Traffic", In Proc. Int. Conference on Passive and Active Network Measurement, April 2008. Second, the constraints under which resources are allocated are highly diverse and may change at any time. Finally, the application QoS demands may depend on the user's current environment (e.g., its location, speed, and distance to other users).

G. Bianchi et al, "A Programmable MAC Framework for Utility-Based Adaptive Quality of Service Support", IEEE JOURNAL ON SELECTED AREAS IN COMMUNICATIONS, VOL. 18, NO. 2, FEBRUARY 2000, discloses the design and evaluation of a programmable medium access control framework, which is based on a hybrid centralized/distributed data link controller. The programmable framework and its associated algorithms are capable of supporting adaptive real-time applications over time-varying and bandwidth limited networks (e.g., wireless networks) in a fair and efficient manner taking into account application-specific adaptation needs. The framework is flexible, extensible and supports the dynamic introduction of new adaptive services on-demand. As part of the service creation process, applications interact with a set of distributed adaptation handlers to program services without the need to upgrade the centralized adaptation controller. This approach is in contrast to techniques that offer a fixed set of "hard-wired" services at the data link from which applications select. A centralized adaptation controller responsible for the fair allocation of available bandwidth among adaptive applications is driven by application specific bandwidth utility curves. A set of distributed adaptation handlers execute at edge devices interacting with a central controller allowing applications to program their adaptation needs in terms of utility curves, adaptation time scales and adaptation policy. The central controller offers a set of simple meta-services called "profiles" that distributed handlers use to build adaptive real-time services.

<u>Summary</u>

The invention consists of apparatuses and methods as defined in independent claims 1, 4, 8, 11, 12, 13.

Embodiments are based on the finding that the application QoS demands may depend on the user's current environment, e.g., its location, speed, and distance to other users. Embodiments are based on the finding that there is a need for more advanced scheduling concepts, which take into account application and application state specific metrics. In other words, embodiments are based on the finding that for modern UEs the users' Quality of Service (QoS) depends not only on its currently running applications but on its context. To efficiently allocate channel resources even under such conditions, embodiments may utilize context information for wireless radio resource management (RRM for abbreviation).

Embodiments can be further based on the finding that context information can be obtained and signaled through a transaction-based architecture and data structures to efficiently access, store, and transfer context information. Moreover, embodiments can be based on the finding that wireless resources can be allocated according to the users' context. Embodiments may provide a scheduling concept to efficiently allocate resources to UEs while accounting for their current application mix and further context information. Hence, embodiments may provide a resource allocation framework that may be completely or partially used to assess, signal, and allocate resources in context-aware wireless networks. Embodiments may therefore also be based on the finding that a more efficient radio resource management can be achieved in a mobile communication system when the resource allocation, i.e. the scheduling, is aware of the users' context. Such context can be defined as information extracted from the users' environment and as a combination of such information.

Embodiments may also be referred to as context-aware resource allocation (CARA for abbreviation), and they may comprise a system with multiple components.

Embodiments may provide an apparatus for a mobile transceiver in a mobile communication system or network. The terms mobile communication system and mobile communication network will be used synonymously in the following. Such an apparatus may be implemented as a context extraction module that observes context information at the UE or mobile transceiver. The context information may then be transported based on transactions which, for each running application, combine data, traffic requirements, and related signaling information within a single protocol data unit. Moreover, embodiments may provide an apparatus for a base station transceiver, which may comprise a corresponding transaction-based scheduler that efficiently solves the resource allocation problem over all applications in the system.

Embodiments may enable efficient radio resource management by using a scheduling concept which is aware of the users' context. Embodiments may enable precise adjustments of the scheduling and resource allocation to the applications' demands. Embodiments may enable quick reactions of a scheduler when an application changes its demands or when these demands cannot be fulfilled. Moreover, embodiments may enable to integrate context-awareness into existing RRM schemes independent on scheduler specifics or traffic models.

More specifically, embodiments may provide an apparatus for a mobile transceiver in a mobile communication system, i.e. embodiments may provide said apparatus to be operated by or included in a mobile transceiver. In the following, the apparatus will also be referred to as mobile relay station transceiver apparatus. The mobile communication system further comprises a base station transceiver. The mobile communication system may, for example, correspond to one of the 3GPP-standardized mobile communication networks as an LTE (as abbreviation for Long Term Evolution), an LTE-A (as abbreviation for LTE-Advanced), a UTRAN (as abbreviation for UMTS Terrestrial Radio Access, wherein UMTS abbreviates Universal Mobile Telecommunication System), a E-UTRAN (as abbreviation for Evolved-UTRAN), a GERAN (as abbreviation for GSM/EDGE Radio Access Network, GSM abbreviating Global System for Mobile Communication, EDGE abbreviating Enhanced Data Rates for GSM Evolution), generally an OFDMA (as abbreviation for Orthogonal Frequency Division Multiple Access) network, etc.

The mobile transceiver apparatus comprises means for extracting context information from an application being run on the mobile transceiver, from an operation system being run on the mobile transceiver, or hardware drivers or hardware of the mobile transceiver, the context information comprising information on a state of the application and/or information on a state of the mobile transceiver. In other words, the context information may comprise information on the application, for example, it may comprise an information on a user focus, i.e. whether the application is currently displayed in the foreground or in the background, information on the type of application, i.e. web browsing, interactive, streaming, conversational, etc., information on the type of request, i.e. whether the requested data is just a prefetch or it is to be displayed immediately, information on certain delay or QOS requirements, etc.

In other words, the context information can be provided per application. For example, two streaming applications are running in parallel on the mobile transceiver. According to the prior art, both applications' data would be mapped to streaming transport channels at the lower layers. Therefore, according to the prior art, data from the two applications would not be distinguished by a scheduler. According to embodiments, the context information may be available for the applications separately. For example, the context information of one application may indicate that it is displayed in the foreground; the context information of the other application may indicate it is in background. Therefore, embodiments can provide the advantage that these two applications and their data can be distinguished by the scheduler and the application running in the foreground can be prioritized. The context information can as well be extracted from the operation system, as an application may not have the information on whether it is in foreground or background. This information, also determining a state of the application, may be extracted from a window manager of the operation system of the mobile transceiver.

Moreover, the mobile transceiver apparatus may comprise means for communicating data packets associated with the application with a data server through the base station transceiver. In other words, the mobile transceiver uses the base station transceiver to communicate with the data server using data packets. These data packets can be transmitted and received in both directions, from the mobile transceiver to the base station transceiver, i.e. in the uplink, and also from the base station transceiver to the mobile transceiver, i.e. in the downlink. For data scheduling the downlink direction is more popular and the following embodiments will be described with focus on the downlink. However, embodiments can also provide context awareness for uplink scheduling, as e.g. in UTRAN using E-DCH (as abbreviation for Enhanced-Dedicated Channel, also referred to as HSUPA abbreviating High Speed Uplink Packet Access). It is to be noted, that the data exchange is assumed to be carried out between the mobile transceiver and a data server, through the mobile communication network. The data server can therefore correspond to any other communication equipment, as e.g. a data storage, a personal computer, another mobile transceiver, a tablet computer, etc. As the wireless interface between the base station transceiver and the data server is likely to be the bottleneck in the transmission chain, scheduling for the wireless interface is critical for the overall transmission and may therefore determine the user satisfaction and whether the QOS requirements are met for the respective service.

Furthermore, the mobile transceiver apparatus comprises means for providing the context information to the base station transceiver. The means for providing the context information can be adapted to provide the context information using a signaling connection to the base station transceiver, it may as well include the context information for the downlink transmission in an uplink transmission and vice versa. In embodiments the context information may comprise information on a quality of service requirement of the application, priority information of the data packets associated with the application, information on a unity of a plurality of the data packets of the application, information on a load demand of the application, information on a delay or error rate constraint of the application, information on the window state, information on the memory consumption, information on the processor usage of the application running on the mobile transceiver, information on the current location, speed, orientation of the mobile transceiver, and/or a distance of the mobile transceiver to another mobile transceiver.

The unity of the data packets may refer to information indicating that a number of data packets belong together, for example, the application can correspond to an image displaying application and the image data is contained in a plurality of data packets. Then the context information may indicate how many data packets refer to one image. This information may be taken into account by the scheduler. In other words, from the context information the scheduler may determine a certain relation between the data packets, e.g. the user may only be satisfied if the whole image is displayed, therefore all packets referring to the image have to be transmitted to the mobile transceiver in an adequate time interval. Therewith the scheduler can be enabled to plan ahead.

In embodiments the means for extracting can be adapted to extract the context information from an operation system of the mobile transceiver or from the application being run on the mobile transceiver. In other words, the operation system of the mobile transceiver can provide the context information, e.g. as state information of an application (foreground/background, active/suspended, standby, etc.). Another option is that the application itself provides the context information. In embodiments the mobile transceiver apparatus may further comprise means for composing a transaction data packet, the transaction data packet may comprise data packets from the application and the context information. In other words, embodiments may use a protocol having multiple data packets in its payload section and the context information in its control section.

Moreover, embodiments may provide an apparatus for a base station transceiver in the mobile communication system, i.e. embodiments may provide said apparatus to be operated by or included in a base station transceiver. In the following, the apparatus will also be referred to as base station transceiver apparatus. The base station transceiver apparatus comprises means for receiving data packets associated with an application being run on the mobile transceiver and it comprises means for obtaining context information on the data packets associated with the application. Moreover, the base station transceiver apparatus comprises means for scheduling the mobile transceiver for transmission of the data packets based on the context information. As has been described above, the scheduler or the means for scheduling takes into account the context information and therefore carries out context-aware scheduling.

Embodiments of the base station transceiver apparatus may obtain the context information in different ways. Three examples are, the context information is received from the mobile transceiver, the context information is received from the data server, or the context information is determined from the bypassing data packets exchanged between the mobile transceiver and the data server, e.g. by sniffing or eavesdropping or inspecting the data packets. In other words, in embodiments the means for obtaining can be adapted to obtain the context information by inspecting the data packets, by receiving context information from the mobile transceiver, and/or by receiving the context information from a data server. As has been described above, the context information may comprise information on a quality of service requirement of the application, priority information of the data packets associated with the application, information on a unity of a plurality of the data packets of the application, information on a load demand of the application, information on a delay or error rate constraint of the application, information on the window state, information on the memory consumption, information on the processor usage of the application running on the mobile transceiver, information on the current location, speed, orientation of the mobile transceiver, and/or a distance of the mobile transceiver to another mobile transceiver.

Furthermore, the means for scheduling can be adapted to schedule the mobile transceiver for transmission such that the quality of service requirement for the plurality of data packets to which the information on the unity refers to is met. In other words, the scheduler can take into account that user satisfaction may only be achieved when all data packets of the unity are delivered in time and therefore plan ahead. The means for scheduling can be adapted to determine a transmission sequence of a plurality of transactions, a transaction being a plurality of data packets for which the context information indicates unity and the plurality of transactions referring to a plurality of applications being run by one or more mobile transceivers. In other words, data packets originating from the same application, i.e. sharing the same state and requirement as e.g. all objects of a web page, may be gathered together with the additional context information forming a so-called transaction. The transactions may then serve to determine a scheduling class. That is to say the scheduling may not be carried out on a user basis, e.g. on a buffer state, but rather on an application or transaction basis. The transactions may then be differentiated by the scheduler rather than differentiating only on a user level. A user or mobile transceiver may utilize multiple transactions for multiple applications and the context information may be obtained for each transaction separately.

The means for scheduling may then determine an order of the sequence of transactions based on a utility function, the utility function depending on a completion time of a transaction, which is determined based on the context information. In other words, the context information may be evaluated using a utility function. The utility function may be a measure for the user satisfaction and therefore depend on a completion time of a transaction, e.g. for a transaction comprising data packets of a web page a web browsing application has requested the completion time may for example be 2s. In other words, full user satisfaction may be achieved when the full content of the web page is transmitted in less than 2s. Otherwise, the user satisfaction and therewith the utility function will degrade. The sequence of the transactions can be determined in different ways in embodiments. In some embodiments the transmission sequence is determined from an iteration of multiple different sequences of transactions. The multiple different sequences can correspond to different permutations of the plurality of transactions. The means for scheduling can be adapted to determine the utility function for each of the multiple different sequences and it can be further adapted to select the transmission sequence from the multiple different sequences corresponding to the maximum utility function. In other words, in embodiments the scheduling decision may be determined based on an optimized user satisfaction or utility function, where the optimization may be based on a limited set of sequences.

In some embodiments, the actual transmission sequence or scheduling decision may be further based on the radio condition of a particular user, e.g. the means for scheduling can be adapted to further modify the transmission sequence based on the supportable data rate for each transaction. In other embodiments other fairness criteria or rate or throughput criteria may be considered.

Furthermore, embodiments may provide an apparatus for a data server, i.e. embodiments may provide said apparatus to be operated by or included in a data server. In the following, the apparatus will also be referred to as data server apparatus. The data server may communicate data packets associated with an application being run on the mobile transceiver through the mobile communication system to the mobile transceiver. The data server apparatus may comprise means for deriving context information for the data packets and means for transmitting the context information along with the data packets to the mobile communication system. In other words, the application or operation system on the data server may be the counter part with respect to context information provision to the application or operation system on the mobile transceiver. Again, the context information may comprise information on a quality of service requirement of the application, priority information of the data packets associated with the application, information on a unity of a plurality of the data packets of the application, information on a load demand of the application, information on a delay or error rate constraint of the application, information on the window state, information on the memory consumption, information on the processor usage of the application running on the mobile transceiver, etc. The means for deriving can be adapted to extract the context information from an operation system of the data server or from the application being run on the data server.

In embodiments the data server apparatus can further comprise means for composing a data packet, the data packet comprising data packets from the application and the context information. I.e. the data server may terminate the transaction protocol. Thus, the data server apparatus may further comprise means for composing a transaction data packet, the transaction data packet may comprise data packets from the application and the context information.

Embodiments may further provide the corresponding methods. Embodiments may provide a method for a mobile transceiver in a mobile communication system, the mobile communication system further comprises a base station transceiver. The method comprises a step of extracting context information from an application being run on the mobile transceiver, from an operation system being run on the mobile transceiver, or hardware drivers or hardware of the mobile transceiver, the context information comprising information on a state of the application and/or information on a state of the mobile transceiver. The method further comprises a step of communicating data packets associated with the application with a data server through the base station transceiver and a step of providing the context information to the base station transceiver.

Furthermore, embodiments may provide a method for a base station transceiver in a mobile communication system, the mobile communication system further comprises a mobile transceiver. The method comprises a step of receiving data packets associated with an application being run on the mobile transceiver and a step of obtaining context information on the data packets associated with the application. The method further comprises a step of scheduling the mobile transceiver for transmission of the data packets based on the context information.

Moreover, embodiments may provide a method for a data server. The data server communicates data packets associated with an application being run on a mobile transceiver through a mobile communication system to the mobile transceiver. The method comprises a step of deriving context information for the data packets and a step of transmitting the context information along with the data packets to the mobile communication system.

Embodiments may further provide a mobile transceiver comprising the above mobile transceiver apparatus, a base station transceiver comprising the above base station transceiver apparatus, a data server comprising the above data server apparatus, and/or a communication system comprising the mobile transceiver, the base station transceiver, and/or the data server.

Embodiments can further comprise a computer program having a program code for performing one of the above described methods when the computer program is executed on a computer or processor.

It is to be noted, that embodiments may use channel estimation or channel prediction means for determining the channel quality or supportable data rates for transactions in the future. The channel estimation and/or prediction means can be adapted to base the channel estimation and/or prediction on a current channel estimation, a channel estimation history, i.e. former channel estimates, a known propagation condition or propagation loss, statistical knowledge on the radio channel, etc.

Embodiments can provide the advantage of allowing a radio resource management that enables to free channel resources when they are not needed by an application or to prioritize applications only when required, which can improve the efficiency at which the channel resources are used. Simulations showed that embodiments may make more efficient use of the radio resources than current scheduling policies under the PF (as abbreviation for Proportional Fair) constraint or under the minimum average delay constraint (i.e., EDF as abbreviation for Earliest Deadline First). Compared to PF, 75% more load may be supported at equal QoS. Compared to EDF, 65% more may be supported.

Moreover, embodiments may increase the flexibility of the RRM and applications. Unlike with current RRM schemes, delay may be traded-off with data rate and applications can be informed on the RRM status. This may not only allow to adjust resource usage to the users' or operator's demands. It may also allow RRM and applications to react to changed conditions (channel, load, traffic requirements, UE capabilities) and, thus, may open more efficient ways for RRM and application design.

Brief description of the Figures

Some other features or aspects will be described using the following non-limiting embodiments of apparatuses and/or methods and/or computer programs by way of example only, and with reference to the accompanying figures, in which

Figure 1 shows a communication system with embodiments;

Figure 2 shows a basic structure of an RRM system;

Figure 3 depicts a block diagram of an embodiment of an apparatus for a mobile transceiver and an embodiment of an apparatus for a base station transceiver;

Figure 4 depicts a block diagram of an embodiment of an apparatus for a mobile transceiver;

Figure 5 depicts a block diagram of another embodiment of an apparatus for a mobile transceiver;

Figure 6 illustrates transactions used by embodiments;

Figure 7 depicts a block diagram of an embodiment of an apparatus for a base station transceiver;

Figure 8 illustrates means for scheduling of an embodiment;

Figure 9 shows viewgraphs illustrating sequence penalty dependence for different embodiments;

Figure 10 shows an exemplary utility function;

Figure 11 illustrates the calculation of the change in total utility;

Figure 12 illustrates simulation results in average sum utility versus traffic load;

Figure 13 shows simulation results in average cell throughput versus traffic load;

Figure 14 depicts simulation performances in average transaction utility versus traffic load for different numbers of iterations;

Figure 15 depicts a block diagram of an embodiment of an apparatus for a data server;

Figure 16 shows a flow chart of an embodiment of a method for a mobile transceiver;

Figure 17 shows a flow chart of an embodiment of a method for a base station transceiver; and

Figure 18 shows a flow chart of an embodiment of a method for a data server.

Description of some Embodiments

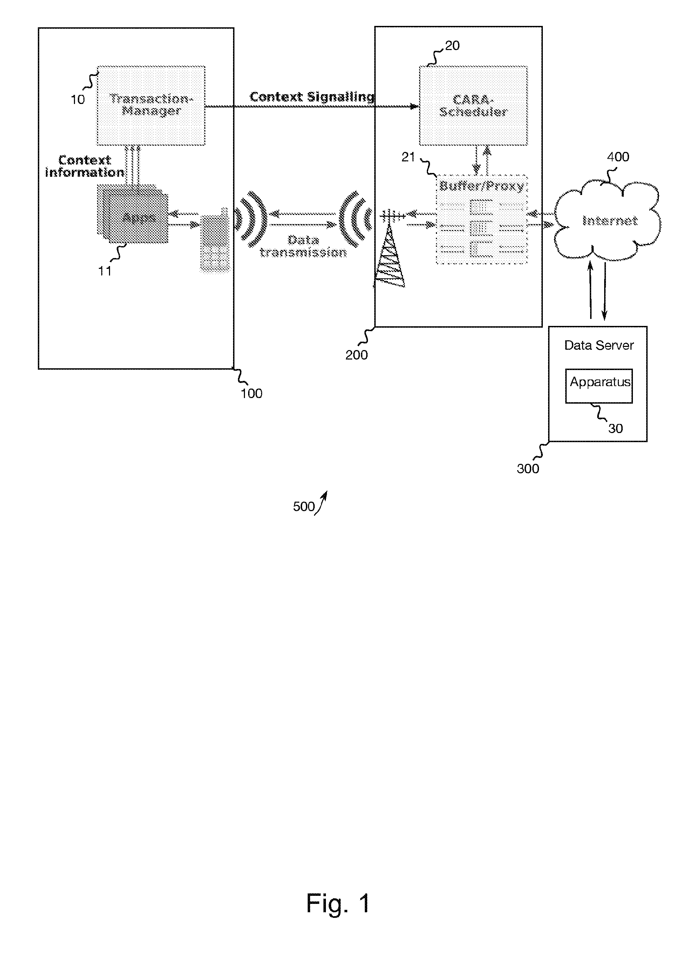

Figure 1 shows a communication system 500 with embodiments of a mobile transceiver 100 comprising a mobile transceiver apparatus 10, which is also labeled as "Transaction-Manager" and a number of applications 11 being executed on the mobile transceiver 100. Furthermore, Figure 1 shows a base station transceiver 200 with a base station transceiver apparatus 20, which is also labeled as "CARA-scheduler" and a data buffer or data proxy 21. The base station transceiver 200 has a connection to the internet 400, which connects to a data server 300 with a data server apparatus 30. As indicated in Figure 1, data transmissions are carried out between the mobile transceiver 100 and the data server 300 via the base station transceiver 200 and through the internet 400. Moreover, context information signaling is established between the mobile transceiver 100 and the base station transceiver 200. In the embodiment, the context information is provided by the application 11 to the mobile transceiver apparatus 10. Before more details on the components of the communication system 500 are provided, some basic definition and concepts on scheduling or an RRM system are illuminated.

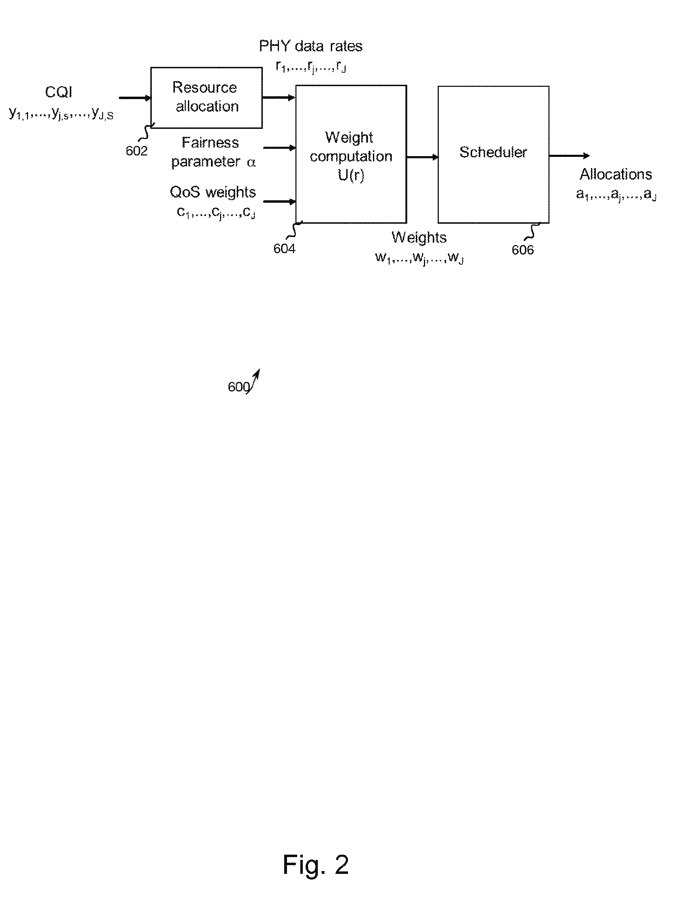

A basic structure of an RRM system 600 is illustrated in Figure 2. As indicated in Figure 2 the system comprises a resource allocation component 602, a weight computation component 604 and a scheduling component 606. In cellular networks or mobile communication systems 500, resource allocation is performed at each base station transceiver 200 (BS for abbreviation). Radio resources are assigned to mobile transceivers 100 for data transmission before the actual data is transmitted using said assigned or allocated radio resources. The base station transceiver 200 assigns a subset of $s=1,...,S$, where S denotes the full set of radio resources or physical resource blocks (PRB for abbreviation), PRB to each active UE $j=1,...,J$ or mobile station transceiver 100. Then, the scheduler 602 chooses a subset of UEs to serve in the current time frame. To make these assignments and scheduling decisions, the RRM system may take several factors into account. For example, the instantaneous channel state $\gamma_{j,s}$, reflected by a Channel Quality Indicator (CQI for abbreviation) for each arbitrary UE 100 $j$ and each arbitrary PRB $s$ may be provided from the mobile transceiver 100 to the base station transceiver 200 for resource allocation 602. Another factor is the so called fairness, reflected by a global fairness parameter $\alpha$ and a utility function $U_j(.)$, and QoS demands, reflected by a QoS weight $c_j$, cf. weight computation 604 in Figure 2. The Scheduler 606 then determines the actual allocations based on the weights.

Embodiments may provide the advantage that their main operation unit may not be data rate. Examples for objective functions and constraints in data rate can be found in J. Huang, V. G. Subramanian, R. Agrawal, and R. A. Berry "Downlink Scheduling and Resource Allocation for OFDM Systems", IEEE Trans. Wireless Commun., vol. 8, pp. 288-296, 2009; Wen-Hsing Kuo and Wanjiun Liao, "Utility-based radio resource allocation for QoS traffic in wireless networks", IEEE Tans. Wireless Commun., vol. 7, pp. 2714-2722, 2008; S. Shakkottai and A. L. Stolyar, "Scheduling Algorithms for a Mixture of Real-Time and Non-Real-Time Data in HDR", Proc. Int. Teletraffic Congress (ITC-17), 2001; and F. Kelly, "Charging and rate control for elastic traffic", Euro. Trans. Telecomms., vol. 8, pp. 33-37, 1997.

Examples for objective functions and constraints in bandwidth can be found in G. Bianchi and A.T. Campbell, "A programmable MAC framework for utility-based adaptive quality of service support", IEEE Journal on Selected Areas in Commun., vol. 18, pp. 244-255, 2000. These objective functions and constraints may be applied in embodiments in addition to the context awareness. Conventional resource allocation schemes may not directly account for delay or error rate requirements of the UEs. Such requirements can be artificially transformed to an average data rate, which may become a poor statistical representation with bursty traffic. This makes difficult to design rate-based resource allocation schemes that guarantee a certain delay or error rate.

Moreover, embodiments may additionally account for traffic requirements by either adjusting the utility function, for which examples can be found in G. Bianchi and A.T. Campbell, "A programmable MAC framework for utility-based adaptive quality of service support", IEEE Journal on Selected Areas in Commun., vol. 18, pp. 244-255, 2000; and Wen-Hsing Kuo and Wanjiun Liao, "Utility-based radio resource allocation for QoS traffic in wireless networks", IEEE Trans. Wireless Commun., vol. 7, pp. 2714-2722, 2008, or the QoS weights for a specific UE, which are exemplified for example in S. Shakkottai and A. L. Stolyar, "Scheduling Algorithms for a Mixture of Real-Time and Non-Real-Time Data in HDR", Proc. Int. Teletraffic Congress (ITC-17), 2001.

By giving priorities to UEs but not to applications, these schemes may only prioritize all applications of one UE 100 at once. Consequently, they may not separately prioritize single or subsets of applications. When a UE 100 runs a multitasking operation system, this UE may run multiple applications in parallel whose demands fundamentally differ from each other, which may not be accounted for in conventional systems.

Furthermore, conventional RRM systems are not context-aware. Embodiments may provide the advantage that additional context information is considered, such as e.g. the load demands of each application currently running on the UE 100, the delay or error rate constraints of each application currently running on the UE 100, information on the window state, information on the memory consumption, information on the processor usage of the application running on the mobile transceiver 100, and/or the current location, speed, orientation of the UE and its distance to other users.

Having access to this context information, the schedulers of embodiments may optimize the resource allocation to the users' current context. Embodiments may use a context-aware approach therewith provide a QoS that is higher than the QoS of conventional concepts and embodiments may achieve this enabling a more efficient usage of resources.

A typical scheduling approach aims to maximize a utility function $U_j(.)$ that is a function of PHY (as abbreviation for Physical Layer or Layer 1) data rate. Such a scheduler is illustrated in Figure 2 and mainly has the inputs CQI $\gamma_{j,s}$, $c_j$, and $\alpha$. Based on the $J \times S$ CQI matrix Y, where S denotes a channel index, resource allocation 602 assigns the PRBs and provides the resulting PHY rate $r_j$ per UE, i.e. per mobile transceiver, to the weight computation component 604. Based on these rates and the UE-specific weights $w_j$, the scheduler 606 then aims to maximize the weighted sum rate over all $J$ users. While the optimal solution can be obtained by convex optimization, for which an example can be found in J. Huang, V. G. Subramanian, R. Agrawal, and R. A. Berry "Downlink Scheduling and Resource Allocation for OFDM Systems", IEEE Trans. Wireless Commun., vol. 8, pp. 288-296, 2009, in practice, heuristics are used to quickly solve this optimization problem with limited computational resources. The result can be represented by an allocation vector **a** with J binary entries.

The UE-specific weight $w_j$ can account for fairness and QoS constraints and it can be computed based on a global fairness parameter $\alpha$ and on a UE-specific QoS weight $c_j$. Different fairness modes are typically reflected by the strictly concave utility function, as for example

$$U_j(r_j) = \begin{cases} c_j \log(r_j), \alpha = 0 \\ \dfrac{c_j r_j^{\alpha}}{\alpha}, \ otherwise \end{cases} \tag{1}$$

based on the average PHY rate $\bar{r}_j$ of an arbitrary user $j$. Taking the derivative $U_j'$ of this utility function in $r_j$ results in the weight

$$w_j := U_j'(r_j) = \begin{cases} c_j / r_j, & \alpha = 0 \\ c_j r_j^{\alpha-1}, & otherwise \end{cases} \tag{2}$$

of an arbitrary user $j$.

It is easy to show that for $\alpha = 1$ the utility function (1) represents max-rate scheduling and it was proven by F. Kelly, "Charging and rate control for elastic traffic", Euro. Trans. Telecomms., vol. 8, pp. 33-37, 1997, that $\alpha = 0$ results in the widely-used proportional fair scheduling rule. As first embodiment of scheduling extension is based on proportional fairness, the basics of this scheme are detailed in the following, starting with the weight computation 604.

Proportional fair scheduling allocates the channel to the user with the maximum instantaneous PHY rate $r_j$ with respect to its average rate $\bar{r}_j$. To this end, the proportional fair scheduling weight $w_j$ of a user $j$ is

$$w_j(t) = \frac{r_j(t)}{\bar{r}_j(t)} \tag{3}$$

where $\bar{r}_j$ is typically calculated as an exponential moving average

$$\overline{r}_j(t+1) = \begin{cases} \beta \cdot r_j(t) + (1-\beta) \cdot \overline{r}_j(t), & j = i \\ (1-\beta) \cdot \overline{r}_j(t), & otherwise \end{cases} \qquad (4)$$

with $\beta$ being a forgetting factor; a parameter between 0 and 1 chosen by the operator and determining the convergence rate.

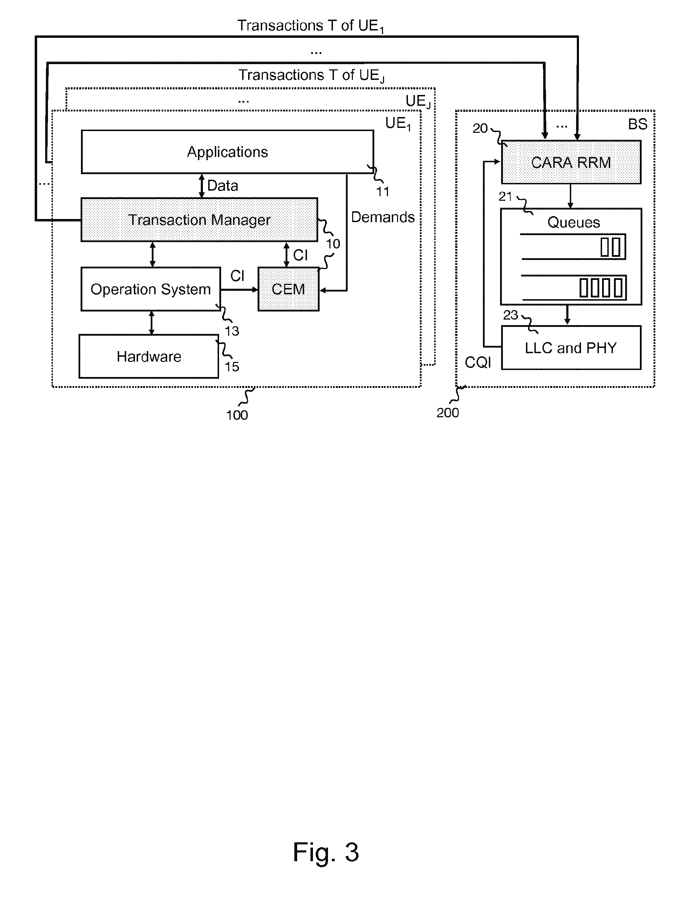

Embodiments can make use of the context-aware resource allocation (CARA) using context information (CI) either to improve the QoS or to efficiently allocate channel resources while keeping the applications' QoS constraints. Figure 3 depicts a block diagram of an embodiment of an apparatus 10 for a mobile transceiver 100 and an embodiment of an apparatus 20 for a base station transceiver 200. Figure 3 illustrates the main architecture of context-aware resource allocation (CARA). Figure 3 shows J UEs, of which on mobile transceiver 100 is referenced. In embodiments a plurality of mobile transceivers and applications may be considered for scheduling by the base station transceiver 200. The mobile transceiver 100 comprises a transaction manager and a context extraction module 10, which are an implementation of the mobile transceiver apparatus 10. The transaction manager may be used to transfer the context information (CI).

Moreover, Figure 3 depicts applications 11, and operation system 13 and other hardware 15 of the mobile transceiver 100. The base station transceiver comprises the apparatus 20 for the base station transceiver 200, which is also labeled as "CARA RRM" module 20, and which interacts with the queues 21 for the data packets. Moreover, Figure 3 shows the lower layer protocols 23, i.e. link layer control (LLC for abbreviation) and PHY, which provide CQI to the apparatus 20. In the embodiment transactions are used to provide context information (CI) to the context-aware radio resource management (RRM) schemes 20 at the base station transceiver(BS) 200.

At the UE 100, the mobile transceiver apparatus 10, which may also be referred to as Context Extraction Module (CEM), collects and processes CI that is then transferred to the BS 200 within a transaction. At the BS 200, the CARA scheme carried out by the base station transceiver apparatus 20 uses the CI and further information to assign the resources to the users' applications. Then, control channels may be used to signal these assignments to the UEs 100.

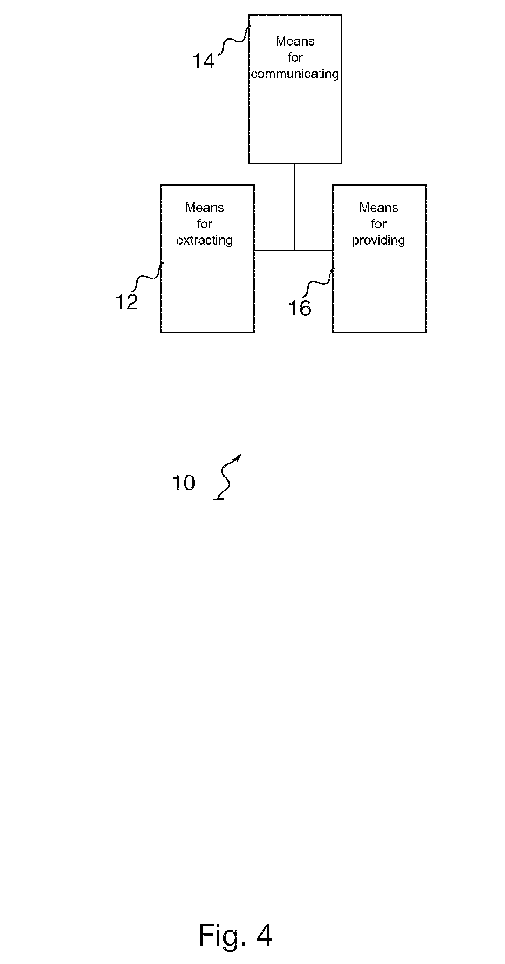

Figure 4 illustrates a block diagram of an embodiment of a mobile transceiver apparatus 10. The apparatus 10 comprises means for extracting 12 context information from an application being run on the mobile transceiver 100, from an operation system being run on the mobile transceiver 100, or hardware drivers or hardware of the mobile transceiver 100, and the context information comprising information on a state of the application and/or information on a state of the mobile transceiver 100. The apparatus 10 further comprises means for communicating 14 data packets associated with the application with a data server 300 through the base station transceiver 200. The apparatus further comprises means for providing 16 the context information to the base station transceiver 200. The context information may comprise information on a quality of service requirement of the application, priority information of the data packets associated with the application, information on a unity of a plurality of the data packets of the application, information on a load demand of the application, information on a delay or error rate constraint of the application, information on the window state, information on the memory consumption, information on the processor usage of the application running on the mobile transceiver, information on the current location, speed, orientation of the mobile transceiver 100, and/or a distance of the mobile transceiver 100 to another mobile transceiver.

The mobile transceiver apparatus 10, which may be realized as a CEM, can be integrated into the UE's 100 operation system (OS for abbreviation) or into the applications running on the UE 100. In other words, the means for extracting 12 can be adapted to extract the context information from the operation system of the mobile transceiver 100 or from the application being run on the mobile transceiver 100. Integration of such extracting into the OS, can be realized as a module of the OS Kernel. Such an implementation may also be supported for hardware drivers and it is supported by many OS and related development frameworks. Embodiments implementing CEM as a Kernel module may provide the benefit that CEM can directly communicate with Kernel functions, such as an OS scheduler, a window manager, a memory management, and a network stack, or other Kernel modules via system calls.

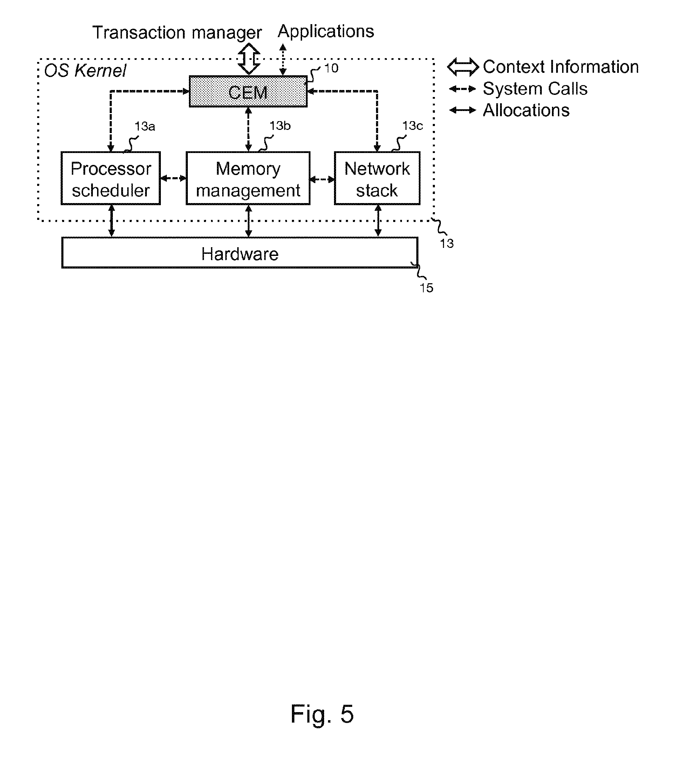

Figure 5 depicts a block diagram of an embodiment of an apparatus 10 for a mobile transceiver 100 extracting the context information from an OS Kernel 13. Figure 5 illustrates the OS Kernel 13 with the apparatus 10 realized as CEM, a processor scheduler 13a, a memory management 13b and a network stack 13c. System calls can be exchanged between the processor scheduler 13a, the CEM 10 and the memory management 13b. Further system calls can be exchanged between the network stack 13c the CEM 10 and the memory management 13b. All OS components may interact with the hardware 15 and assign the respective allocations. The CEM 10 may exchange system calls with application and provide the corresponding context information.

The system calls can be assumed public de-facto standards for each OS, i.e. accessible by the CEM 10, and can be, thus, used by the CEM 10. For instance, the CEM 10, i.e. the apparatus 10 for the mobile transceiver 100, can observe system calls from the processor scheduler 13a and window manager to extract which applications are currently running in the OS 13 foreground while consuming processing cycles. Thereby, CEM 10 extracts which applications currently require QoS priority at the base station transceiver 200.

Integrating CEM or the apparatus 10 at application level can be unified via an application programming interface (API for abbreviation). Most OS vendors provide such APIs and publish their interfaces. In particular, CEM 10 can be a part of the API's programming libraries and thereby its interface (function or method call), its source code may even be unknown. In a software implementation the CEM 10 object code may be statically or dynamically linked to the application. While this would simplify access to internal parameters of each application, it may complicate the observation of other applications or of OS functions. Functions or applications not linked to the CEM 10 library may be indirectly observed. This makes implementing CEM 10 as a Kernel Module as an embodiment with additional advantages.

In embodiments the apparatus 10 for the mobile transceiver 100 may further comprise means for composing a transaction data packet, the transaction data packet comprising data packets from the application and the context information. In other words, the transaction may correspond to a protocol data unit that includes all communication between an application 11 on the UE 100 and an application or server program running on another UE 300 or in a computing center 300, which are implementations of the data server 300, cf. Figure 1. The transaction data packet may comprise all data packets of one service process of an application. For instance, all packets related to a single Web page can be included regardless of the number of objects out of which this web page consists. The transaction data packet may comprise all signaling information related to one service process. In particular, it may comprise starting messages that initiate and terminate a service process. Unlike with TCP (abbreviating Transmission Control Protocol), such initiation can be performed at application level and may include information that is specific to the underlying MAC or PHY (e.g., a QoS class supported by a specific BS 200 vendor). Moreover, it may comprise interfaces for the MAC and PHY of the network components. For instance, UE 100 and BS 200 may access specified data fields within the transaction to extract application information, as e.g., an application's delay constraints or traffic profile.

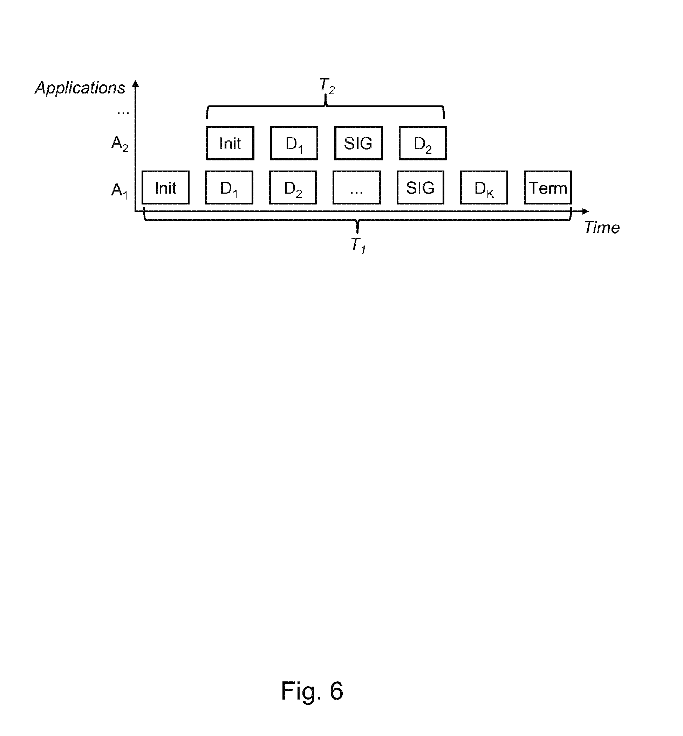

Thereby, transactions or transaction data packets may provide the interface and information to perform context-aware RRM while being transparent to the applications. An implementation example for a transaction is illustrated in Figure 6. Figure 6 shows two example transactions $T_1$ and $T_2$, which are implemented at IP level. The example implementation of transactions $T_1$, $T_2$ is shown for two applications $A_1$, $A_2$: Each transaction starts with an "Init" packet and contains an arbitrary number of data and "SIG" (as abbreviation for Signaling) packets that can be transmitted at arbitrary positions. A transaction may be actively ended with a "Term" packet or, passively, by a timeout. Note, that each application can initiate an arbitrary number of transactions and that network components, such as UE 100 and data server 300, can add SIG and data packets "D" to a transaction.

Figure 6 shows a view graph having two different applications $A_1$ and $A_2$ on the ordinate and time on the abscissa. The components of the two transactions are indicated by labeled blocks. Application data blocks are labeled by "$D_i$", where the index corresponds to a counter for the sequence of data packets. Each application can initiate a transaction by transmitting an "Init" signal, e.g., an IP packet with an "Init" message within an IP packet field as indicated by the correspondingly labeled blocks in Figure 6. The transaction can be actively ended by a "Term" signal, as it is indicated by the block labeled "Term" in the transaction $T_1$ in Figure 6 or, passively, by a timeout, as it is assumed for $T_2$ in Figure 6. Such timeouts can be system constants or they can be included into the "Init" or "SIG" signals of the transactions. Other control information and CI can be included into "Init" or "SIG" signals, which are correspondingly labeled. SIG signals can appear at any time and can be added by each network device that supports transactions. For instance, the MAC (abbreviating Medium Access Control) of a context-aware BS 200 can use SIG to inform an application 11 at a UE 100 that its data rate demands cannot be met. Then, application 11 can answer with a "Term" or can remain silent to continue the transaction at a lower data rate.

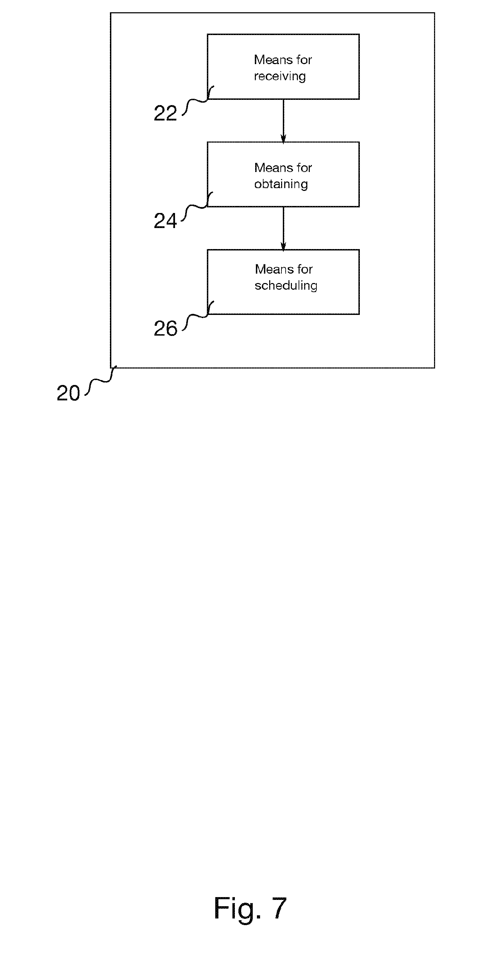

Figure 7 depicts a block diagram of an embodiment of an apparatus 20 for a mobile transceiver 200 in a mobile communication system 500. The apparatus 20 comprises means for receiving 22 data packets associated with an application being run on the mobile transceiver 100 and means for obtaining 24 context information on the data packets associated with the application. The apparatus 20 further comprises means for scheduling 26 the mobile transceiver 100 for transmission of the data packets based on the context information. The means for obtaining 24 can be adapted to obtain the context information by inspecting the data packets, by receiving context information from the mobile transceiver 100, and/or by receiving the context information from a data server 300.

Again, said context information may comprise information on a quality of service requirement of the application, priority information of the data packets associated with the application, information on a unity of a plurality of the data packets of the application, information on a load demand of the application, information on a delay or error rate constraint of the application, information on the window state, information on the memory consumption, information on the processor usage of the application running on the mobile transceiver 100, information on the current location, speed, orientation of the mobile transceiver 100, and/or a distance of the mobile transceiver 100 to another mobile transceiver. Moreover, the means for scheduling 26 can be adapted to schedule the mobile transceiver 100 for transmission such that the quality of service requirement for the plurality of data packets to which the information on the unity refers to is met.

The means for scheduling 26 can be adapted to determine a transmission sequence of a plurality of transactions. A transaction may correspond to a plurality of data packets for which the context information indicates unity and the plurality of transactions may refer to a plurality of applications being run by one or more mobile transceivers 100. The order of the sequence of transactions can be based on a utility function. The utility function can depend on a completion time of a transaction, which is determined based on the context information.

In other words, in embodiments context-aware RRM schemes may allocate a weight to each transaction and schedule the transaction with the highest weight. To follow the time-variant channel and application demands, it can be assumed that weights and schedule are periodically updated, as e.g. once per transmission time interval (TTI for abbreviation). Therewith, embodiments may schedule based on transactions, they may operate in time rather than in data rate and they may determine a beneficial or improved scheduling sequence before scheduling.

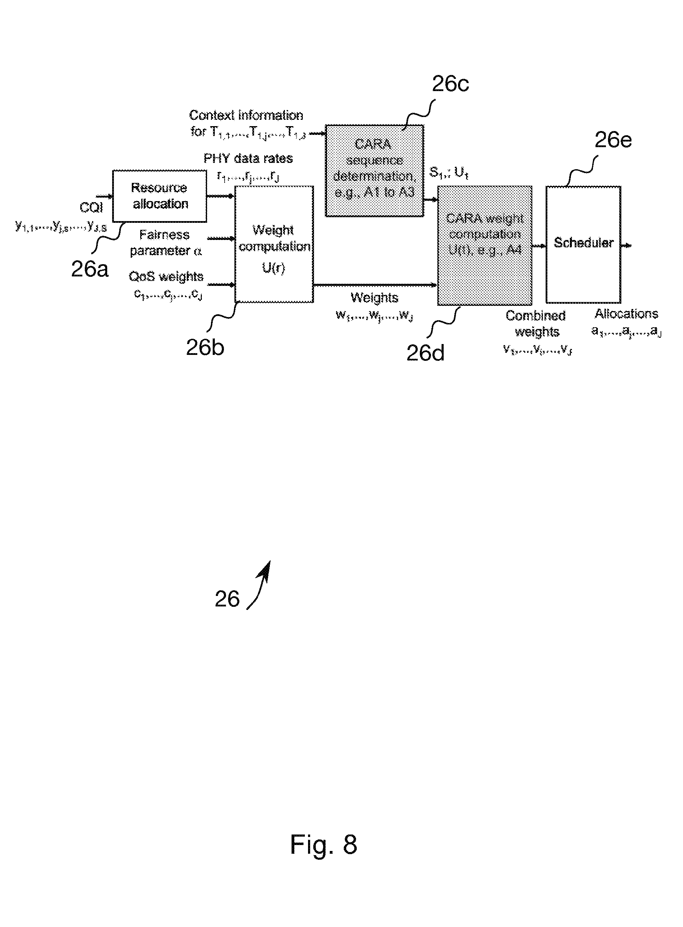

Figure 8 illustrates the means for scheduling 26 of an embodiment in more detail. Context Information (CI) of J transactions is used for context-aware RRM. This can be based on functions or components 26c to determine the utility-maximizing sequence according to the current CI and on components or functions 26d to compute the final scheduling weights according to function and/or on the conventional weights.

Figure 8 shows the embodiment's means for scheduling 26, which comprises a resource allocation component 26a, a weight computation component 26b, a CARA sequence determination component 26c, a CARA weight computation component 26d and a scheduling component 26e. The parameters given in Figure 8 represent the same quantities as in Figure 2. As illustrated in Figure 8 and compared with Figure 2 embodiments may add two additional components 26c and 26d or functions. The first component 26c determines a sequence of transactions, which is also called CARA sequence, which aims to maximize the sum utility function. The second function or component 26d computes the final scheduling weights based on the CARA sequence and conventionally computed scheduling weights. The resulting weights are then passed to the scheduler 26e.

The first function or component 26c can be independent on the scheduler design and is described below. For the second function or component 26d, two embodiments are described that may integrate context awareness into a variety of existing schedulers. As has already been stated above, a sequence of transactions that aims to maximize the sum utility by using CI may be determined. In other words, the transmission sequence can be determined from an iteration of multiple different sequences of transactions, where the multiple different sequences correspond to different permutations of the plurality of transactions. The means for scheduling 26 can be adapted to determine the utility function for each of the multiple different sequences and can be further adapted to select the transmission sequence from the multiple different sequences corresponding to the maximum utility function.

More specifically, in the embodiment a constraint that one transaction always has to be processed as a whole may be used. This may substantially reduce the number of possible combinations and, thus, the computational complexity. The sequence determination component 26c in Figure 8 can operate as follows:

It may, in a first step, start with an arbitrary transaction sequence $S_1 = \{T_{11}, T_{12}, ...\}$ with $T_{ij}$ being the transaction at index $j$ in sequence $i$. $N$ is the total number of transactions. $r_j(t)$ is the estimated PHY capacity in bits, *transaction j* can transmit at time slot $t$ and $U_j(t)$ is the utility that *transaction j* achieves if it finishes at time $t$. Subsequently, in a second step, the determination component 26c may determine the total sum utility $U_1$ of $S_1$ as follows:

$R_j :=$ remaining bits of transaction $_j$
$t :=$ current time slot
$j := 1$
$U := 0$
*# for all transactions*
**while** $j <= N$ **do**
    $R_j = R_j - r_j(t)$
    *# no more bits to transmit*
    **if** $R_j <= 0$ **then**

        $U = U + U_j(t)$
        $j = j + 1$
    **end if**
    $t = t + TTI$
**end while**
**return** $U$

i.e. by summing up all utilities of all transactions in the sequence to obtain a sum utility per sequence. Next, in third step, the sequence $S_1$ is mutated to obtain sequence $S_2$ with the following function:

Choose two arbitrary indices x and y $\in$ {1, ..., N}
Move T1x to T2y in sequence S2
Shift all transactions in (x, y] in S1 towards x in S2

Furthermore, the total sum utility $U_2$ of $S_2$ can be calculated in a fourth step as in the second step. Subsequently, in fifth step the procedure can be repeated for a predefined number of iterations k as follows

Choose $S_1$ and determine $U_1$

*# repeat for k iterations*

**for** $i = 1$ **to** $k$ **do**

    $S_2 = \text{Mutate}(S_1)$

    Determine $U_2$

    *# new sequence has higher utility*

    **if** $U_2 > U_1$ **then**

        $S_1 = S_2$

        $U_1 = U_2$

    **end if**

**end for**

**return** $S_1, U_1$

In other words, the sequence with the maximum utility function among the permutations is searched. The result is a sequence $S_1$ of ordered transactions that approaches a value close to the maximal sum utility, when the transactions are scheduled in this order. The maximum utility (i.e., the optimum) is not reached in practice, as the computation time, i.e., number of iterations $k$, is limited. Nonetheless, even small $k$ lead to substantial performance gains, which will be shown in the sequel by simulation results. Moreover, embodiments may repeat the above procedure if the estimated PHY capacity $r_j$ and the remaining bits $R_j$ for all transactions $j \in \{1, \cdots, N\}$ can not be assumed constant or semi-static any more. If either $r_j$ or $R$ changes, the above steps may be repeated in embodiments.

The means for scheduling 26 can be adapted to further modify the transmission sequence based on the supportable data rate for each transaction. For example, proportional fair scheduling may be integrated. A first embodiment may combine the obtained CARA sequence with a proportional fair (PF) scheduling concept and therewith support CQI-aware scheduling, which exploits CQI differences among the UEs.

The PF scheduling weight and moving average can be calculated, for example, as in (3) and (4), respectively. To combine the CARA sequence and PF scheduling weight, it is assumed that the transactions are ordered as a sequence $S_1$, as given above such that each transaction can be assessed by an index $j$. Then, the embodiment may calculate the combined weight $v_j$ as follows:

*# for all transactions in the sequence*

**for** $j = 1$ **to** $N$ **do**

    $v_j = w_j - p\,(j-1)$

**end for**

where $p$ is a so-called penalty-factor. This free parameter allows to trade-off the context-optimized CARA sequence versus the CQI-optimized PF weight. A penalty factor of p=0 means that pure PF scheduling is used, whereas $p \rightarrow \infty$ does not change the CARA sequence. Finally, the transaction with the largest weight $v_j$ is scheduled. Embodiments may therewith provide another advantage that a fine-tuning is enabled between CARA and PF, or generally between CARA and any other scheduling concept.

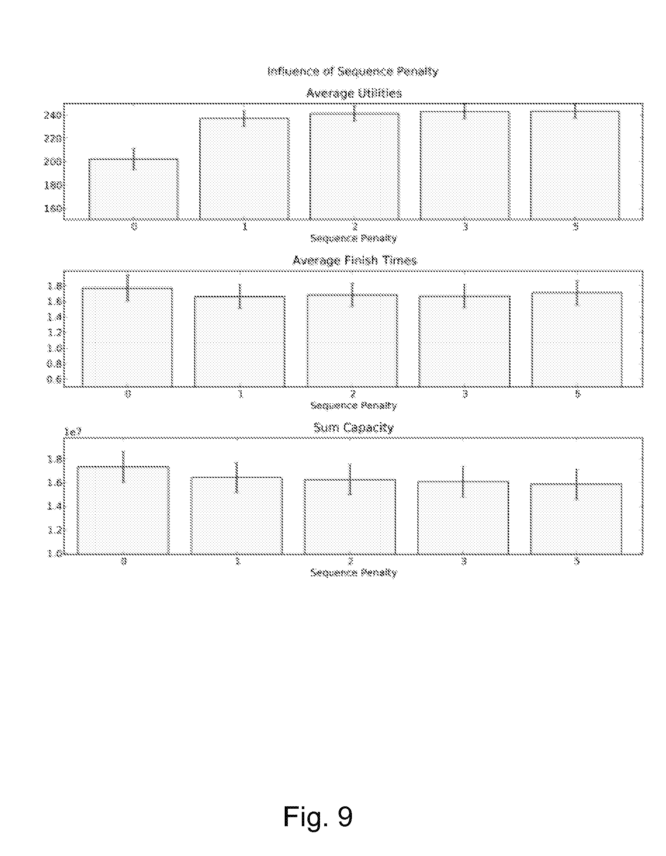

Figure 9 shows viewgraphs illustrating the sequence penalty for different embodiments, i.e. simulation results of the CARA heuristic with different penalties are displayed. At the top the average utilities, in the middle the average finishing times in seconds, and on the bottom the sum capacity in bits/second are shown, influenced by the penalty-parameter $p$. In the following the simulation scenario will be described. All evaluations are performed in a single radio cell, which serves 20 users. Here, only the downlink direction is considered. For each user, there is a separate traffic generator that creates transactions and queues them at the base station transceiver 200. The base station transceiver's 200 scheduler 26 then has to decide how the data of all users are to be multiplexed on the radio link. For each user, there is one UE which receives the users data. The model of the radio system is chosen according to a typical 3GPP Long Term Evolution (LTE) system with frequency division duplexing.

To have realistic interference conditions, one tier of interfering base stations is placed around the evaluated cell. These base stations are assumed to be constantly transmitting on all resources. 20 UEs are dropped into the serving area of the evaluated cell uniformly. The base stations and the mobile devices are equipped with isotropic antennas. All base stations transmit with a constant power equally distributed over all resources. For each link, the path loss is fixed during the whole simulation, which allows omitting handovers. Shadowing and fast fading fluctuate according to a fixed velocity to resemble the variations of the radio channel in the time scale of seconds. The details of the radio propagation model are given in the following table.

| Property | Value |
|---|---|
| Inter BS distance: | 1000 m |
| BS/UE height: | 32 m / 1.5 m |
| Carrier frequency: | 2 GHz |
| System Bandwidth: | 10 MHz |
| BS TX power: | 46 dBm |
| Path loss: | $128.1 + 37.6 \log_{10}(d)$, d distance in km |
| Shadowing | 8 dB log-normal, correlation distance 50 m |
| Multipath propagation | Rayleigh (modified Jakes' model), Vehicular A channel taps |
| UE velocity | 10 km/h (for shadowing and multipath propagation; fixed for pathloss) |
| Frame duration | 1ms |
| Link adaptation | idealized (Shannon formula) with SINR clipping at 20 dB |
| UEs per cell | 20 |

The scheduler operates at an interval of lms. For simplicity, it can only allocate the whole bandwidth to a single user. The effects of frequency-selectivity are well-understood in literature and therefore not regarded here. The link adaptation is idealized by the Shannon formula, as it is not in the focus here. The SINR value is clipped at 20 dB to avoid unrealistic good channel conditions. Transport protocols (e.g. Transmission Control Protocol, TCP) are not considered. It is assumed that all data of a transaction is available at the base station immediately after it has been sent by the server. This approximates the behavior of a system which is equipped with a TCP proxy in the base station. The traffic model is configured on the basis of the NGMN (abbreviating Next Generation Mobile Networks) traffic model, cf. NGMN Alliance, "Radio access performance evaluation methodology," available online at http://www.ngmn.org/, Jun. 2007.

Furthermore two traffic classes are selected, which are usually served in the best effort bearer: Web surfing (HTTP as abbreviation for Hypertext Transfer Protocol) and file downloads (FTP abbreviating File transfer Protocol). The HTTP model describes the composition of a web page. It consists of a main object (HTML text, HTML abbreviating Hypertext Markup Language) and a random number of embedded objects (pictures, java script etc.). The sizes of the main objects and of the embedded objects follow truncated lognormal distributions. The number of embedded objects per page follows a truncated Pareto distribution with a mean of 5.64 and a maximum of 53 (for more details see the above referenced document). All objects of a web page constitute a single transaction.

For simplification, the total size of the web page is calculated (sum of main object size and all embedded object sizes) and assumed that the whole page is transmitted in a single object. Unless mentioned otherwise, aggregated traffic consisting of 90% HTTP and 10% File Transfer Protocol (FTP), corresponding to 20% and 80% of the data volume, is used.

In embodiment context information from the application layer may not be directly exploited for scheduling. CARA may be enabled by giving each transaction a utility function. The utility may depend on the requirements of a transaction and how these requirements are met. The process flow for utility functions can be as follows:

Context information like the foreground/background status of an application or the application type is used to derive the requirements for the associated transactions. These requirements may then allow deriving utility functions giving a value to the transaction in dependence of its finish or completion time. This derivation, giving the shape and parameters of the respective utility function, can be reasoned with user experience studies.

E.g., when surfing the web, users are happy with fast page loads, but also tolerate a certain delay, cf. J. Nielsen, "Website response times," http://www.useit.com/alertbox/response-times.html, 2010, link verified on Feb. 3rd, 2011. This can then be expressed in a utility function as described below. Utility functions may express the latency requirements of transactions. This can allow the scheduler to decide which transaction should be scheduled when. Transactions with relaxed latency requirements can be shifted in time to increase the multi-user diversity and channel-awareness. Utility is typically defined as a function of the data rate, which can be extended by embodiments. Embodiments may express the value of a transaction for the user. For most transactions, e.g. downloading a web page, this depends on the finish time only. The value of all transactions can be defined to be in the range 0..1, where 0 means no value (delayed infinitely) and 1 means optimal value.

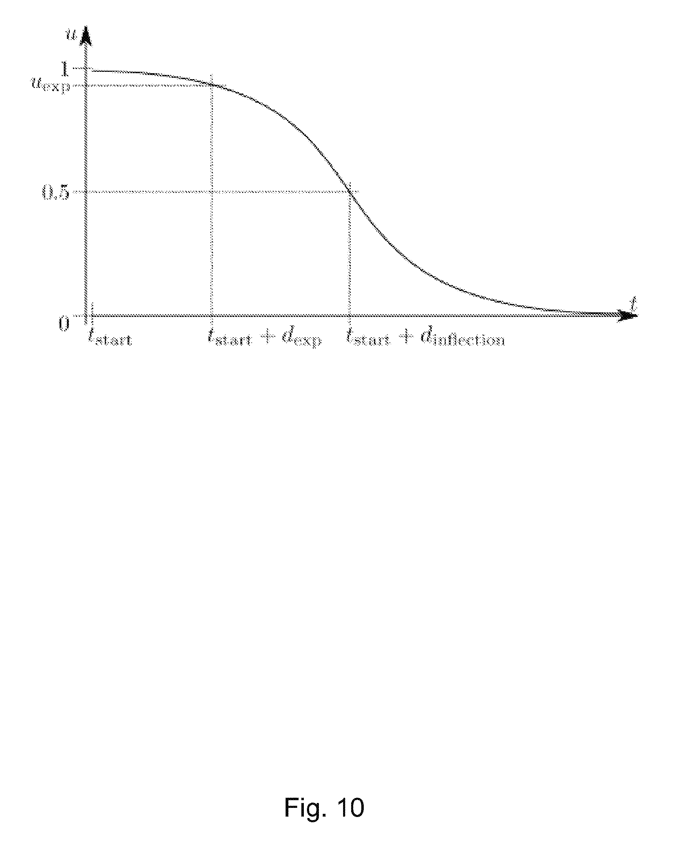

If the transaction is finished earlier than expected, this can only slightly increase its value. If it is delayed much longer then, when the typical user resigns to wait for it, the value cannot become worse, because most of the users are not waiting anymore. Therefore, the function of the value depending on the finish time has an S-shape. The logistic function may be chosen in an embodiment. Figure 10 shows an exemplary utility function with the following parameters. The following paragraphs will reason the choice of these parameters.

It is assumed that the transaction arrives at the scheduler at time $t_{start}$. All other points in time are defined as durations relative to $t_{start}$. The Utility of a transaction finished in the time expected by the user can be defined to be $u_{exp}$. To allow for a small increase of the utility if the network's performance exceeds the user's expectation, $u_{exp}$ is less than 1. The expected finish time of a transaction depends on its size, on the type of application, and the user's context. It is assumed that the user has purchased a certain data rate $r_{max}$ from his operator. The user is ignorant of his current radio channel and therefore expects this data rate to be available at all times. The expected data rate $r_{exp}$ is defined in relation to the purchased data rate:

$$r_{\exp} = f \cdot r_{\max}$$

The user requests that foreground transactions are served with the full data rate ($f = 1$). For background transactions, this requirement is relaxed and the user is satisfied with a fraction of the rate (f < 1). The duration from the start of the transaction to the expected finish time is then determined by

$$d_{\exp} = \frac{s}{r_{\exp}},$$

where s is the size of the transaction in bits and $r_{exp}$ is the expected data rate in bits per second. The duration from start to the inflection point of the logistic curve ($u_{inflection} = 0.5$) can be modeled to be a multiple of the expected finish duration:

$$d_{\inf lection} = x \cdot d_{\exp}$$

The resulting utility function can be given by

$$u(t) = \frac{1}{1 + e^{(t-m)k}}$$

with

$$m = t_{start} + x \cdot d_{\exp}$$

$$k = \frac{r_{\max} f}{(1-x)s} \ln \frac{1}{u_{\exp} - 1} \cdot$$

Figure 9 demonstrates the effect of changing the penalty parameter on the average transaction utility, on the average duration a transaction needs to finish, and on the sum capacity in bits/second per cell. Note that it is straightforward to extend this embodiment to frequency-selective scheduling where multiple transmissions are scheduled simultaneously. Instead of evaluating PHY capacity $r_j(t)$ only once per time slot, $r_i(t, f)$, can be used, where $f$ is the sub-band index.

Then, $v_j$ on each sub-band can be determined, allowing to schedule multiple transactions in one TTI.

Further embodiments may use utility based resource allocation. These embodiments directly aim to maximize the overall utility $U_1$ of the determined CARA sequence by removing the constraint of a fixed sequence $S_1$. To do so, in an embodiment it can be determined if it is advantageous to schedule a different transaction $j \neq 1$ than the first transaction within sequence $S_1$.

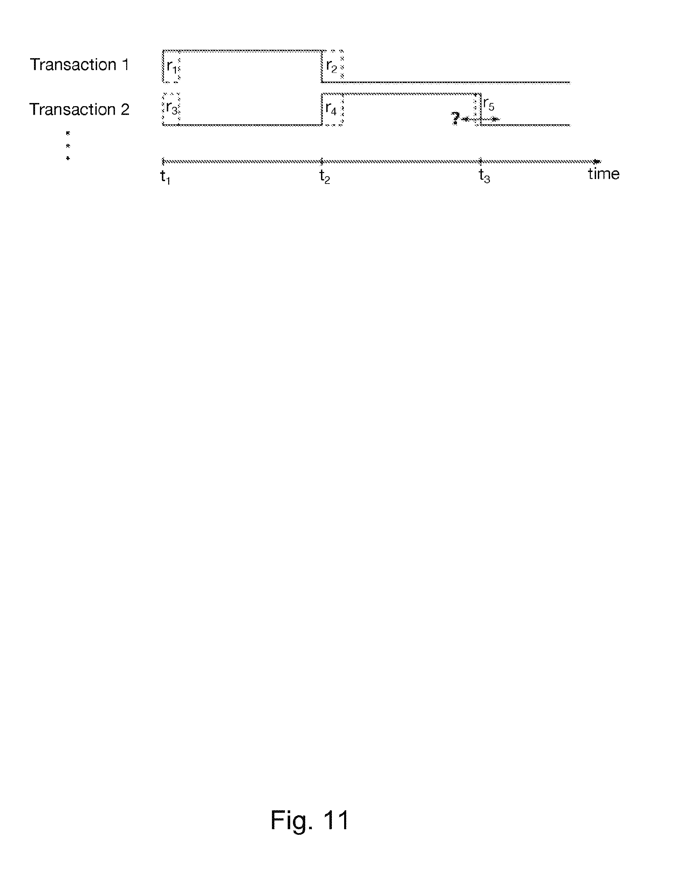

This is illustrated in Figure 11 for two transactions. Figure 11 illustrates the calculation of the change in total utility when switching the resource allocation for the current TTI. Assume that, according to $S_1$, Transaction 1 is to be scheduled first. The expected rates in bits/second for Transaction 1 or 2 in the displayed time instants (current rate for $r_1$ and $r_3$ and estimations of future rates for $r_2$, $r_4$ and $r_5$) are denoted by $r_i$. Now, it is determined whether the sum utility is higher, if Transaction 1 is not scheduled but a different transaction; called Transaction 2 instead. To do so, the expected change for the finish time of Transaction 1 is calculated.

$$\Delta t_1 = TTI \cdot \left\lceil \frac{r_1}{r_2} \right\rceil \qquad (5)$$

and the expected change of the finish time of Transaction 2

$$\Delta t_2 = \left\lceil \frac{r_4 \cdot \left\lceil \dfrac{r_1}{r_2} \right\rceil - r_3}{r_5} \right\rceil \cdot TTI \ . \qquad (6)$$

When the utility function is linearized at the expected finish time, the utility difference for this switching operation can be calculated

$$\Delta U = \frac{dU_1}{dt}(t_2) \cdot \Delta t_1 + \frac{dU_2}{dt}(t_3) \cdot \Delta t_3 \ . \qquad (7)$$

Then, it can be decided if the switching operation is advantageous in terms of total utility. For this, the utility gain $\Delta U$ for all transactions can be compared and the transaction with the highest gain can be scheduled. It is to be noted, that embodiments may use channel estimation or channel prediction means for determining the channel quality or supportable data rates for transactions in the future. The channel estimation and/or prediction means can be adapted to base the channel estimation and/or prediction on a current channel estimation, a channel estimation history, i.e. former channel estimates, a known propagation condition or propagation loss, statistical knowledge on the radio channel, etc.

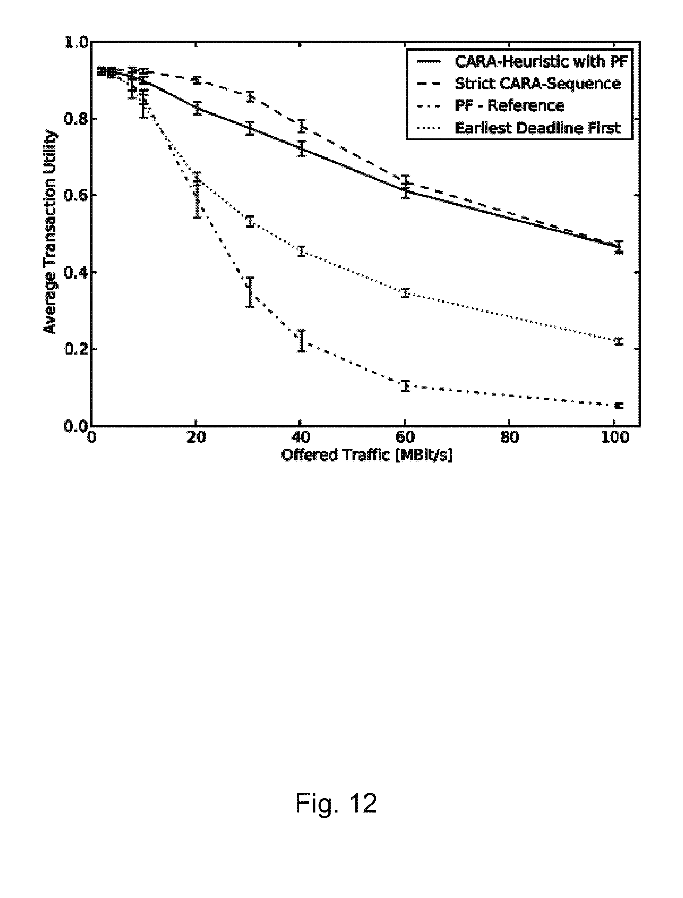

As for the first embodiment, it is straightforward to extend this second embodiment frequency-selective scheduling by evaluating the rates for each sub-band index separately. Figures 12 to 14 show simulation results that demonstrate the performance of the proposed scheduling procedures. The case "CARA-Heuristic with PF" denotes the first embodiment, while the second embodiment is called "Strict CARA-Sequence". Both embodiments are compared to conventional PF scheduling, for which the details can be found in F. Kelly, "Charging and rate control for elastic traffic", Euro. Trans. Telecomms., vol. 8, pp. 33-37, 1997, and to Earliest Deadline First (EDF) - a typical scheduling policy to minimize overdue transmissions. In the simulation, 20 users were placed in a cell and new transactions arrive according to a Poisson process. Unless noted otherwise, $k$=400 iterations where allowed for the above algorithm.

Figure 12 illustrates performance results in average sum utility versus traffic load. Figure 12 demonstrates the utility reached with both CARA RRM embodiments. Both embodiments aim to maximize the utility as a function of the transaction delay. For high traffic load, both embodiments achieve the same utility while supporting for 75% higher load than PF. Compared to EDF, a 65% load gain is shown. These high gains show that either resources can be spent more efficiently (to support higher load) or transaction delays can be decreased.

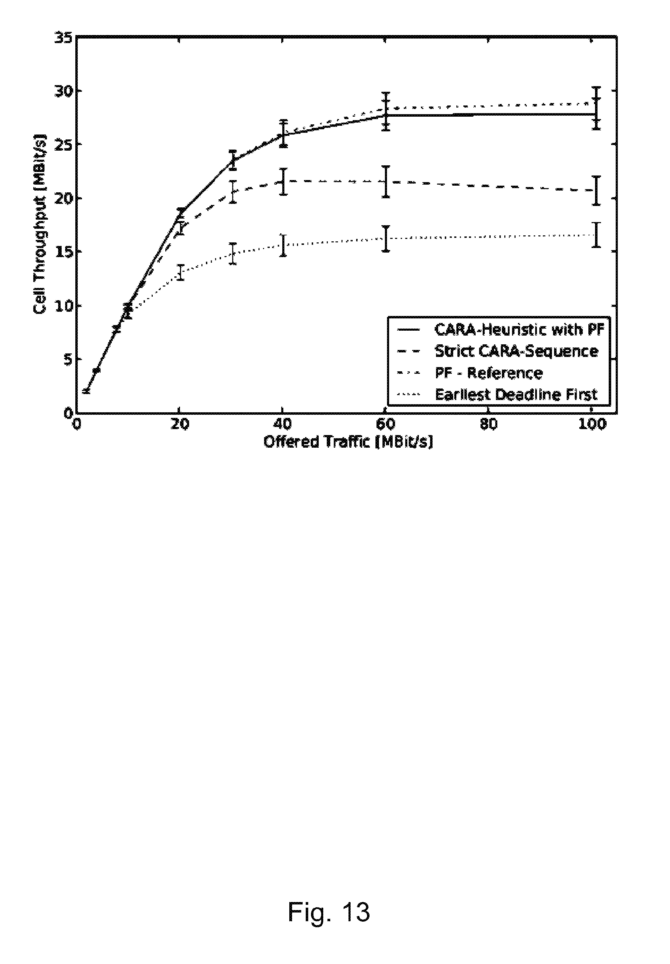

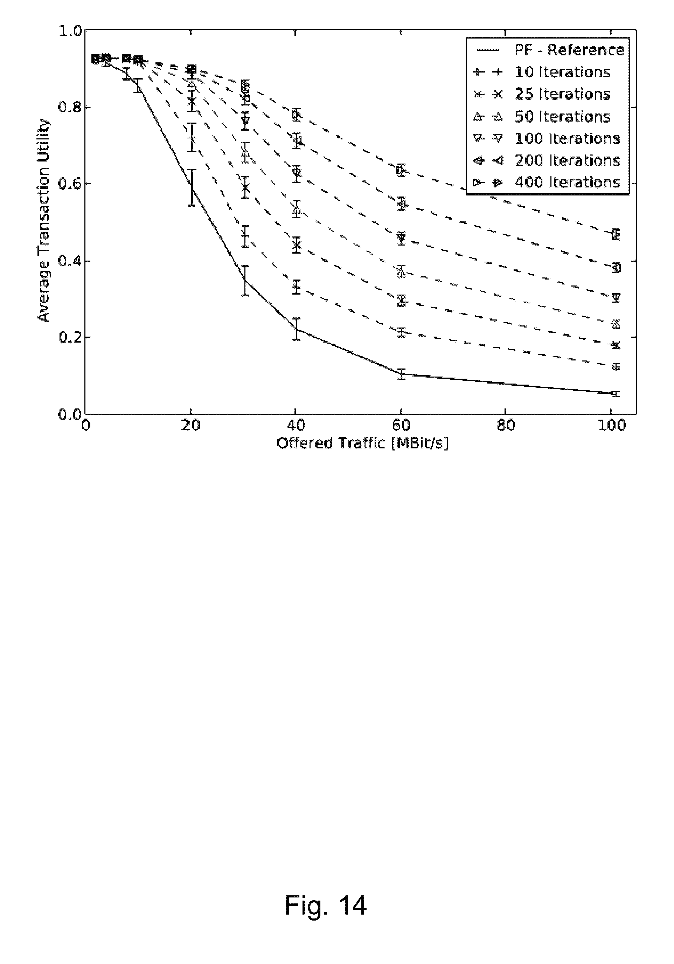

Figure 13 shows simulation performance in average cell throughput versus traffic load. Figure 13 illustrates where the utility gains shown in Figure 12 come from. While both embodiments spend cell data rate to improve the utility, the first embodiment can adjust $p$ to trade-off cell rate versus transaction delay. Figure 14 depicts simulation performances in average transaction utility versus traffic load for different numbers of iterations. Figure 14 shows how the transaction delay improves with the computation time spend for the above iterative algorithm for sequence determination. Note that *k*=400 iterations are a low value for typical MAC processors.

So far, embodiments have been discussed in which the context information is provided by the mobile transceiver apparatus 10. As it has already been discussed the context information may also be obtained by the base station transceiver apparatus 20, e.g. by packet inspection, or by an according data server apparatus 30.

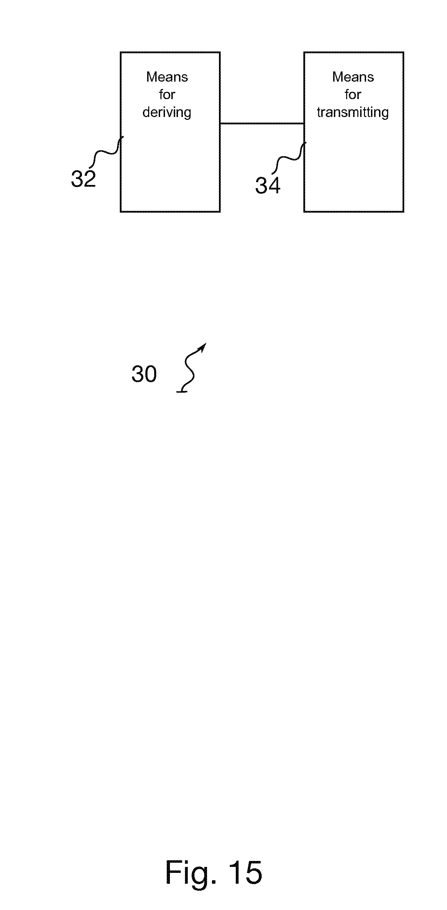

Figure 15 depicts a block diagram of an embodiment of an apparatus 30 for a data server 300. The data server 300 communicates data packets associated with an application being run on a mobile transceiver 100 through a mobile communication system 500 to the mobile transceiver 100. The apparatus 30 comprises means 32 for deriving context information for the data packets and means 34 for transmitting the context information along with the data packets to the mobile communication system 500. The context information may comprise information on a quality of service requirement of the application, priority information of the data packets associated with the application, information on a unity of a plurality of the data packets of the application, information on a load demand of the application, information on a delay or error rate constraint of the application, information on the window state, information on the memory consumption, information on the processor usage of the application running on the mobile transceiver 100, etc. The means for deriving 32 can be adapted to extract the context information from an operation system of the data server 300 or from the application being run on the data server 300. The apparatus 30 may further comprise means for composing a data packet, the data packet comprising data packets from the application and the context information. In further embodiments the apparatus 30 may further comprise means for composing a transaction data packet, the transaction data packet comprising data packets from the application and the context information.

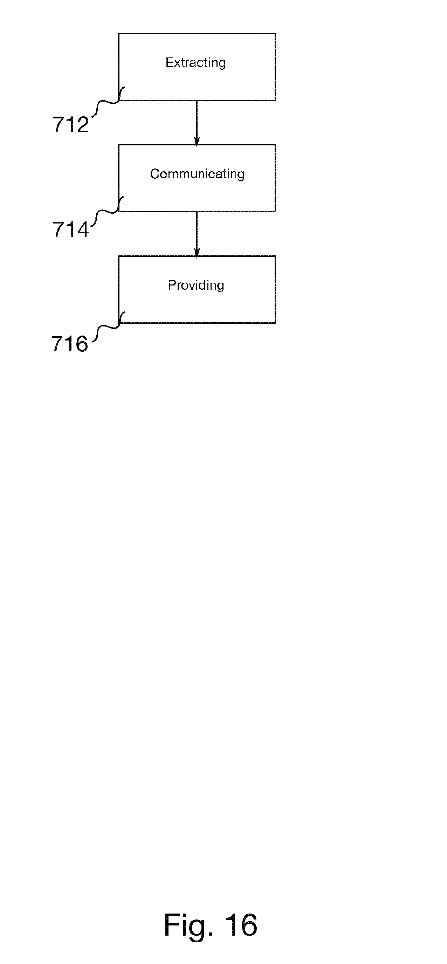

Figure 16 shows a flow chart of an embodiment of a method for a mobile transceiver 100, in a mobile communication system 500, the mobile communication 500 system further comprises a base station transceiver 200. The method comprises a step of extracting 712 context information from an application being run on the mobile transceiver 100, from an operation system being run on the mobile transceiver 100, or hardware drivers or hardware of the mobile transceiver 100, the context information comprising information on a state of the application and/or information on a state of the mobile transceiver 100. The method further comprises a step of communicating 714 data packets associated with the application with a data server 300 through the base station transceiver 200 and a step of providing 716 the context information to the base station transceiver 200.

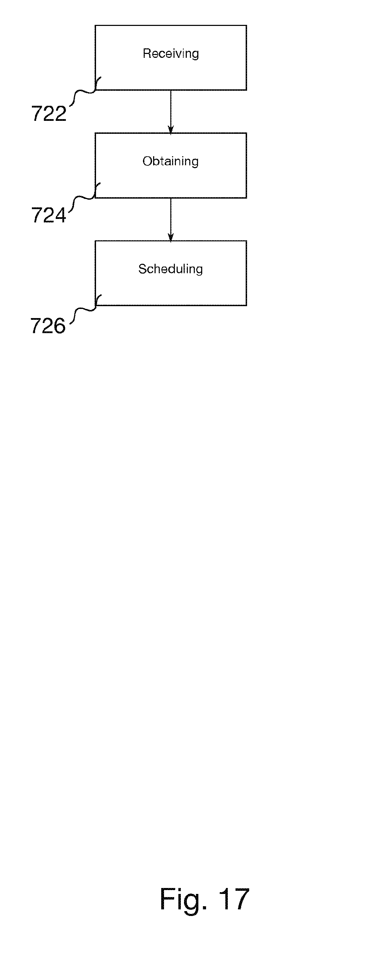

Figure 17 shows a flow chart of an embodiment of a method for a base station transceiver 200 in a mobile communication system 500, the mobile communication system 500 further comprises a mobile transceiver 100. The method comprises a step of receiving 722 data packets associated with an application being run on the mobile transceiver 100 and a step of obtaining 724 context information on the data packets associated with the application. The method further comprises a step of scheduling 726 the mobile transceiver 100 for transmission of the data packets based on the context information.

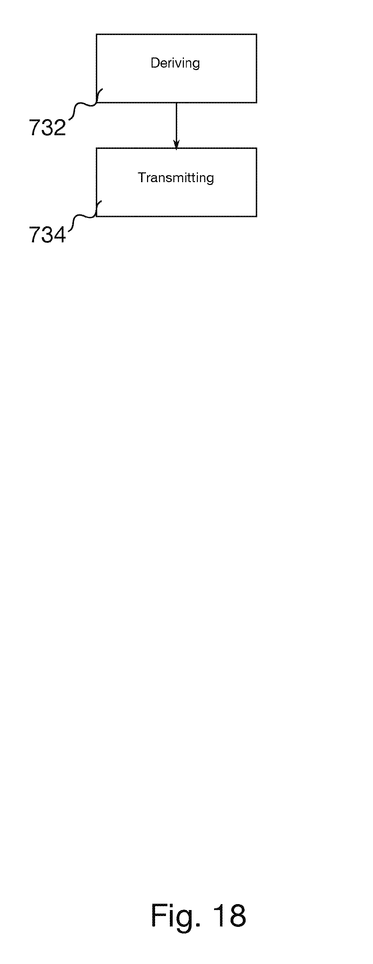

Figure 18 shows a flow chart of an embodiment of a method for a data server 300 communicating data packets associated with an application being run on a mobile transceiver 100 through a mobile communication system 500 to the mobile transceiver 100. The method comprises the steps of deriving 732 context information for the data packets and transmitting 734 the context information along with the data packets to the mobile communication system 500.

Moreover, embodiments may provide a computer program having a program code for performing one of the above methods when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention as defined in the claims.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for extracting", "means for communicating", "means for providing", "means for composing", "means for receiving", "means for obtaining", "means for scheduling", "means for deriving", "means for transmitting", "means for controlling", etc., may be provided through the use of dedicated hardware, such as "a performer", "an extractor", "a communicator", "a provider", "a composer", "a receiver", "an obtainer", "a scheduler" "a deriver" "a transmitter", "a controller" etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for a mobile transceiver (100) in a mobile communication system (500), the mobile communication (500) system further comprising a base station transceiver (200), the apparatus (10) comprising
   means for extracting (12) context information from an application being run on the mobile transceiver (100), context information from an operation system being run on the mobile transceiver (100), or context information from hardware drivers or hardware of the mobile transceiver (100), the context information comprising information on a state of the application and/or information on a state of the mobile transceiver (100), wherein the context information comprises information on whether the application is currently displayed in the foreground or in the background;
   means for communicating (14) data packets associated with the application with a data server (300) through the base station transceiver (200); and
   means for providing (16) the context information to the base station transceiver (200) for scheduling data packets to the mobile transceiver (100).

2. The apparatus (10) of claim 1, wherein the context information comprises one or more elements of the group of information on a quality of service requirement of the application, priority information of the data packets associated with the application, information on a unity of a plurality of the data packets of the application, information on a load demand of the application, information on a delay or error rate constraint of the application, information on a window state, information on a memory consumption, information on a processor usage of the application running on the mobile transceiver (100), information on a current location, speed, orientation of the mobile transceiver (100), or a distance of the mobile transceiver (100) to another mobile transceiver.

3. The apparatus (10) of claim 1, further comprising means for composing a transaction data packet, the transaction data packet comprising data packets from the application and the context information.

4. An apparatus (20) for a base station transceiver (200) in a mobile communication system (500), the mobile communication system (500) further comprising a mobile transceiver (100), the apparatus (20) comprising
   means for receiving (22) data packets associated with an application being run on the mobile transceiver (100);
   means for obtaining (24) context information on the data packets associated with the application, wherein the context information comprises information on whether the application is currently displayed in the foreground or in the background; and
   means for scheduling (26) the mobile transceiver (100) for transmission of the data packets based on the context information.

5. The apparatus (20) of claim 4, wherein the means for obtaining (24) is adapted to obtain the context information by inspecting the data packets, by receiving context information from the mobile transceiver (100), or by receiving the context information from a data server (300), and wherein the context information comprises one or more elements of the group of information on a quality of service requirement of the application, priority information of the data packets associated with the application, information on a unity of a plurality of the data packets of the application, information on a load demand of the application, information on a delay or error rate constraint of the application, information on a window state, information on a memory consumption, information on a processor usage of the application running on the mobile transceiver (100), information on a current location, speed, orientation of the mobile transceiver (100), or a distance of the mobile transceiver (100) to another mobile transceiver, and wherein the means for scheduling (26) is adapted to schedule the mobile transceiver (100) for transmission such that the quality of service requirement for the plurality of data packets to which the information on the unity refers to is met.

6. The apparatus (20) of claim 4, wherein the means for scheduling (26) is adapted to determine a transmission sequence of a plurality of transactions, a transaction data packet comprising data packets from the application and the context information, a transaction being a plurality of data packets for which the context information indicates unity and the plurality of transactions referring to a plurality of applications being run by one or more mobile transceivers (100), the order of the sequence of transactions being based on a utility function, the utility function depending on a completion time of a transaction, which is determined based on the context information.

7. The apparatus (20) of claim 6, wherein the transmission sequence is determined from an iteration of multiple different sequences of transactions, where the multiple different sequences correspond to different permutations of the plurality of transactions, wherein the means for scheduling (26) is adapted to determine the utility function for each of the multiple different sequences and is further adapted to select the transmission sequence from the multiple different sequences corresponding to the maximum utility function, and/or wherein the means for scheduling (26) is adapted to further modify the transmission sequence based on the supportable data rate for each transaction.

8. An apparatus (30) for a data server (300), the data server (300) communicating data packets associated with an application being run on a mobile transceiver (100) through a mobile communication system (500) to the mobile transceiver (100), the apparatus (30) comprising
means (32) for deriving context information for the data packets wherein the context information comprises information on whether the application is currently displayed in the foreground or in the background; and
means (34) for transmitting the context information along with the data packets to the mobile communication system (500) for scheduling the mobile transceiver based on the context information.

9. The apparatus (30) of claim 8, wherein the context information comprises one or more elements of the group of information on a quality of service requirement of the application, priority information of the data packets associated with the application, information on a unity of a plurality of the data packets of the application, information on a load demand of the application, information on a delay or error rate constraint of the application, information on a window state, information on a memory consumption, information on a processor usage of the application running on the mobile transceiver (100), information on a current location, speed, orientation of the mobile transceiver (100), or a distance of the mobile transceiver (100) to another mobile transceiver and wherein the means for deriving (32) is adapted to extract the context information from an operation system of the data server (300) or from the application being run on the data server (300).

10. The apparatus (30) of claim 8, further comprising means for composing a transaction data packet, the transaction data packet comprising data packets from the application and the context information.

11. A method for a mobile transceiver (100) in a mobile communication system (500), the mobile communication (500) system further comprising a base station transceiver (200), the method comprising
extracting (712) context information from an application being run on the mobile transceiver (100), context information from an operation system being run on the mobile transceiver (100), or context information from hardware drivers or hardware of the mobile transceiver (100), the context information comprising information on a state of the application and/or information on a state of the mobile transceiver (100), wherein the context information comprises information on whether the application is currently displayed in the foreground or in the background;
communicating (714) data packets associated with the application with a data server (300) through the base station transceiver (200); and
providing (716) the context information to the base station transceiver (200) for scheduling data packets to the mobile transceiver (100).

12. A method for a base station transceiver (200) in a mobile communication system (500), the mobile communication system (500) further comprising a mobile transceiver (100), the method comprising
receiving (722) data packets associated with an application being run on the mobile transceiver (100);
obtaining (724) context information on the data packets associated with the application, wherein the context information comprises information on whether the application is currently displayed in the foreground or in the background; and scheduling (726) the mobile transceiver (100) for transmission of the data packets based on the context information.

13. A method for a data server (300), the data server (300) communicating data packets associated with an application being run on a mobile transceiver (100) through a mobile communication system (500) to the mobile transceiver (100), the method comprising
deriving (732) context information for the data packets, wherein the context information comprises information on whether the application is currently displayed in the foreground or in the background; and
transmitting (734) the context information along with the data packets to the mobile communication system (500) for scheduling the mobile transceiver based on the context information.

14. A mobile communication system (500) comprising a mobile transceiver (100) comprising the apparatus (10) of claim 1, a base station transceiver (200) comprising the apparatus (20) of claim 4, and/or a data server (300) comprising the apparatus (30) of claim 8.

15. A computer program product having a program code for performing one of the methods of claims 12, 13 or 14, when the program code is executed on a computer or processor.

**Patentansprüche**

1. Vorrichtung (10) für einen mobilen Sendeempfänger (100) in einem mobilen Kommunikationssystem (500), wobei das mobile Kommunikationssystem (500) weiterhin einen Sendeempfänger einer Basisstation (200) umfasst, wobei die Vorrichtung (10) umfasst
Mittel für das Extrahieren (12) von Kontextinformationen aus einer Anwendung, die auf dem mobilen Sendeempfänger (100) ausgeführt wird, von Kontextinformationen eines auf dem mobilen Sendeempfänger (100) ausgeführten Betriebssystems oder von Kontextinformationen von Hardware-Treibern bzw. Hardware des mobilen Sendeempfängers (100), wobei die Kontextinformationen Informationen zum Status der Anwendung und/oder Informationen zu einem Status des mobilen Sendeempfängers (100) umfassen, wobei die Kontextinformationen Informationen dazu umfassen, ob die Anwendung gegenwärtig im Vordergrund oder im Hintergrund angezeigt wird;
Mittel für das Kommunizieren (14) von Datenpaketen, die über den Sendeempfänger der Basisstation (200) der Anwendung einem Datenserver (300) zugeordnet sind; und
Mittel, um die Kontextinformationen dem Sendeempfänger der Basisstation (200) für die Zeitplanung an den mobilen Sendeempfänger (100) zu übermittelnder Datenpakete zur Verfügung zu stellen.

2. Die Vorrichtung (10) nach Anspruch 1, wobei die Kontextinformationen eines oder mehrere Elemente aus der Gruppe von Informationen zu einer Dienstgütenanforderungen der Anwendung, Prioritätsinformationen der mit der Anwendung assoziierten Datenpakete, Informationen zu einer Einheit aus einer Vielzahl von Datenpaketen der Anwendung, Informationen zu einer Anforderung zum Laden der Anwendung, Informationen zu einer beschränkenden Verzögerungs- oder Fehlerquote der Anwendung, Informationen zu einem Fensterstatus, Informationen zu einem Arbeitsspeicherplatzverbrauch, Informationen zu einer Prozessorbeanspruchung der auf dem mobilen Sendeempfänger (100) laufenden Anwendung, Informationen zu einem momentanen Standort, zur Geschwindigkeit oder Ausrichtung des mobilen Sendeempfängers (100) oder zur Entfernung des mobilen Sendeempfängers (100) von einem anderen mobilen Sendeempfänger umfassen.

3. Die Vorrichtung (10) nach Anspruch 1, weiterhin Mittel für das Zusammenstellen eines Transaktionsdatenpakets umfassend, wobei das Transaktionsdatenpaket Datenpakete der Anwendung und Kontextinformationen umfasst.

4. Vorrichtung (20) für einen Sendeempfänger einer Basisstation (200) in einem mobilen Kommunikationssystem (500), wobei das mobile Kommunikationssystem (500) weiterhin einen mobilen Sendeempfänger (100) umfasst, wobei die Vorrichtung (20) umfasst
Mittel für das Empfangen (22) von Datenpaketen, die einer Anwendung zugeordnet sind, die auf dem mobilen Sendeempfänger (100) ausgeführt wird;

Mittel für die Beschaffung (24) von Kontextinformationen zu den der Anwendung zugeordneten Datenpaketen, wobei die Kontextinformationen Informationen dazu umfassen, ob die Anwendung gegenwärtig im Vordergrund oder im Hintergrund angezeigt wird; und

Mittel für die Zeitplanung (26) für den mobilen Sendeempfänger (100) zur Übermittlung der Datenpakete auf der Grundlage der Kontextinformationen.

5. Die Vorrichtung (20) nach Anspruch 4, wobei die Mittel für die Beschaffung angepasst werden für die Beschaffung der Kontextinformationen durch das Prüfen von Datenpaketen, durch den Empfang von Kontextinformationen von dem mobilen Sendeempfänger (100) oder durch den Empfang der Kontextinformationen von einem Datenserver (300), und wobei die Kontextinformationen eines oder mehrere Elemente aus einer Gruppe von Informationen zu den Dienstgütenanforderungen der Anwendung, Prioritätsinformationen der mit der Anwendung assoziierten Datenpakete, Informationen zu einer Einheit aus einer Vielzahl von Datenpaketen der Anwendung, Informationen zu einer Anforderung zum Laden der Anwendung, Informationen zu einer beschränkenden Verzögerungs- oder Fehlerquote der Anwendung, Informationen zu einem Fensterstatus, Informationen zu einem Arbeitsspeicherplatzverbrauch, Informationen zu einer Prozessorbeanspruchung der auf dem mobilen Sendeempfänger (100) laufenden Anwendung, Informationen zu einem momentanen Standort, zur Geschwindigkeit bzw. Ausrichtung des mobilen Sendeempfängers (100) oder zur Entfernung des mobilen Sendeempfängers (100) von einem anderen mobilen Sendeempfänger umfassen, und wobei die Mittel für die Zeitplanung (26) dafür ausgelegt sind, den mobilen Sendeempfänger (100) für die Übertragung so einzustellen, dass die Dienstgütenanforderungen für die Vielzahl von βatenpaketen erfüllt werden, auf die sich die Informationen zu der Einheit beziehen.

6. Die Vorrichtung (20) aus Anspruch 4, wobei die Mittel für die Zeitplanung (26) ausgelegt sind für das Bestimmten einer Übertragungssequenz für eine Vielzahl von Übertragungen, wobei ein Übertragungsdatenpaket aus Datenpaketen aus der Anwendung und Kontextinformationen besteht, wobei eine Transaktion aus einer Vielzahl von Datenpaketen besteht, für welche die Kontextinformationen Einheit anzeigen und wobei die Vielzahl von Transaktionen, die sich auf eine Vielzahl von Anwendungen beziehen, von einem oder mehreren mobilen Sendeempfängern (100) ausgeführt werden, wobei die Sequenz der Transaktionen auf einer Nutzenfunktion beruht, wobei die Nutzenfunktion abhängt von der für den Abschluss einer Transaktion benötigten Zeit, welche auf der Grundlage der Kontextinformationen bestimmt wird.

7. Die Vorrichtung (20) aus Anspruch 6, wobei die Übertragungssequenz durch eine Iteration multipler unterschiedlicher Sequenzen von Transaktionen bestimmt wird, wobei die multiplen unterschiedlichen Sequenzen verschiedenen Permutationen der Vielzahl von Transaktionen entsprechen, wobei die Mittel für die Zeitplanung (26) ausgelegt sind für das Bestimmen der Nutzenfunktion für jede der multiplen unterschiedlichen Sequenzen und weiterhin ausgelegt sind für die Auswahl der Übertragungssequenz der multiplen unterschiedlichen Sequenzen, die der maximalen Nutzenfunktion entsprechen, und/oder wobei die Mittel für die Zeitplanung (26) ausgelegt sind für die weitergehende Modifizierung der Übertragungssequenz auf der Grundlage der für jede Transaktion vertretbaren Daten.

8. Vorrichtung (30) für einen Datenserver (300), wobei der Datenserver (300) einer auf einem mobilen Sendeempfänger (100) ausgeführten Anwendung zugeordnete Datenpakete durch ein mobiles Kommunikationssystem (500) zu einem mobilen Sendeempfänger (100) kommuniziert, wobei die Vorrichtung umfasst:

Mittel (32) für das Ableiten von Kontextinformationen für die Datenpakete, wobei die Kontextinformationen Informationen dazu umfassen, ob die Anwendung gegenwärtig im Vordergrund oder im Hintergrund angezeigt wird; und

Mittel (34) für die Übermittlung der Kontextinformationen zusammen mit den Datenpaketen an das mobiles Kommunikationssystem (500) für die Zeitplanung des mobilen Sendeempfängers (100) auf der Grundlage der Kontextinformationen.

9. Die Vorrichtung (30) nach Anspruch 8, wobei die Kontextinformationen eines oder mehrere Elemente aus der Gruppe von Informationen zu einer Dienstgütenanforderungen der Anwendung, Prioritätsinformationen der mit der Anwendung assoziierten Datenpakete, Informationen zu einer Einheit aus einer Vielzahl von Datenpaketen der Anwendung, Informationen zu einer Anforderung zum Laden der Anwendung, Informationen zu einer beschränkenden Verzögerungs- oder Fehlerquote der Anwendung, Informationen zu einem Fensterstatus, Informationen zu einem Arbeitsspeicherplatzverbrauch, Informationen zu einer Prozessorbeanspruchung der auf dem mobilen Sendeempfänger (100) laufenden Anwendung, Informationen zu einem momentanen Standort, zur Geschwindigkeit oder Ausrichtung des mobilen Sendeempfängers (100) oder zur Entfernung des mobilen Sendeempfängers (100) von einem anderen mobilen Sendeempfänger umfassen, und wobei die Mittel für das Ableiten (32) ausgelegt sind für das Extrahieren der Kontextinformationen aus einem Betriebssystem des Datenservers (300) oder aus der Anwendung, die auf dem Datenserver (300) ausgeführt wird.

10. Die Vorrichtung (30) nach Anspruch 8, weiterhin Mittel für das Zusammenstellen eines Transaktionsdatenpakets umfassend, wobei das Transaktionsdatenpaket Datenpakete der Anwendung und Kontextinformationen umfasst.

11. Verfahren für einen mobilen Sendeempfänger (100) in einem mobilen Kommunikationssystem (500), wobei das mobile Kommunikationssystem (500) weiterhin einen Sendeempfänger einer Basisstation (200) umfasst, wobei das Verfahren umfasst:

das Extrahieren (712) von Kontextinformationen aus einer Anwendung, die auf dem mobilen Sendeempfänger (100) ausgeführt wird, von Kontextinformationen eines auf dem mobilen Sendeempfänger (100) ausgeführten Betriebssystems oder von Kontextinformationen von Hardware-Treibern bzw. Hardware des mobilen Sendeempfängers (100), wobei die Kontextinformationen Informationen zum Status der Anwendung und/oder Informationen zu einem Status des mobilen Sendeempfängers (100) umfassen, wobei die Kontextinformationen Informationen dazu umfassen, ob die Anwendung gegenwärtig im Vordergrund oder im Hintergrund angezeigt wird;
das Kommunizieren (714) von Datenpaketen, die über den Sendeempfänger der Basisstation (200) der Anwendung einem Datenserver (300) zugeordnet sind; und
die Kontextinformationen dem Sendeempfänger der Basisstation (200) für die Zeitplanung an den mobilen Sendeempfänger (100) zu übermittelnder Datenpakete zur Verfügung stellen,

12. Verfahren für den Sendeempfänger einer Basisstation (200) in einem mobilen Kommunikationssystem (500), wobei das mobile Kommunikationssystem (500) weiterhin einen mobilen Sendeempfänger (100) umfasst, wobei das Verfahren umfasst:

das Empfangen (722) von Datenpaketen, die einer Anwendung zugeordnet sind, die auf dem mobilen Sendeempfänger (100) ausgeführt wird;
Beschaffen (724) von Kontextinformationen zu den der Anwendung zugeordneten Datenpaketen, wobei die Kontextinformationen Informationen dazu umfassen, ob die Anwendung gegenwärtig im Vordergrund oder im Hintergrund angezeigt wird; und
die Zeitplanung (726) des mobilen Sendeempfängers (100) für die Übertragung der Datenpakete auf der Grundlage der Kontextinformation.

13. Verfahren für einen Datenserver (300), wobei der Datenserver (300) einer auf einem mobilen Sendeempfänger (100) ausgeführten Anwendung zugeordnete Datenpakete durch ein mobiles Kommunikationssystem (500) zu einem mobilen Sendeempfänger (100) kommuniziert, wobei das Verfahren umfasst:

das Ableiten (732) von Kontextinformationen für die Datenpakete, wobei die Kontextinformationen Informationen dazu umfassen, ob die Anwendung gegenwärtig im Vordergrund oder im Hintergrund angezeigt wird; und
die Übermittlung (734) der Kontextinformationen zusammen mit den Datenpaketen an das mobile Kommunikationssystem (500) für die Zeitplanung des mobilen Sendeempfängers (100) auf der Grundlage der Kontextinformationen.

14. Ein mobiles Kommunikationssystem (500), einen mobilen Sendeempfänger (100) umfassend, der die Vorrichtung (10) aus Anspruch 1 umfasst, eine Sendeempfänger einer Basisstation (200) umfassend, der die Vorrichtung (20) aus Anspruch 4 umfasst, und/oder einen Datenserver umfassend, der die Vorrichtung (30) aus Anspruch 8 umfasst.

15. Ein Computerprogramm-Produkt, ausgestattet mit einem Programmcode für das Ausführen eines der Verfahren aus den Ansprüchen 12, 13 oder 14 wenn der Programmcode auf einem Computer oder von einem Prozessor ausgeführt wird.

**Revendications**

1. Appareil (10) pour un émetteur/récepteur mobile (100) dans un système de communication mobile (500), le système de communication mobile (500) comprenant en outre un émetteur/récepteur de station de base (200), l'appareil (10) comprenant

des moyens pour extraire (12) des informations contextuelles d'une application qui est exécutée sur l'émetteur/récepteur mobile (100), des informations contextuelles. d'un système d'exploitation qui est exécuté sur l'émetteur/récepteur mobile (100), ou des informations contextuelles de pilotes de matériel ou de matériels de l'émetteur/récepteur mobile (100), les informations contextuelles comprenant des informations sur un état de l'application et/ou des informations sur un état de l'émetteur/récepteur mobile (100), les informations contextuelles comprenant des informations indiquant si l'application est actuellement affichée au premier plan ou en arrière-plan ;

des moyens de communication (14) de paquets de données associés à l'application avec un serveur de données (300) à travers l'émetteur/récepteur de station de base (200) ; et

des moyens pour fournir (16) les informations contextuelles à l'émetteur/récepteur de station de base (200) afin d'ordonnancer les paquets de données vers l'émetteur/récepteur mobile (100).

2. Appareil (10) selon la revendication 1, avec lequel les informations contextuelles comprennent un ou plusieurs éléments du groupe incluant des informations sur une exigence de qualité de service de l'application, des informations de priorité des paquets de données associés à l'application, des informations sur une unité d'une pluralité des paquets de données de l'application, des informations sur une demande de charge de l'application, des informations sur une contrainte de retard ou de taux d'erreurs de l'application, des informations sur un état de fenêtre, des informations sur une consommation de mémoire, des informations sur une utilisation du processeur par l'application exécutée sur l'émetteur/récepteur mobile (100), des informations sur un emplacement, une vitesse, une orientation actuels de l'émetteur/récepteur mobile (100), ou une distance entre l'émetteur/récepteur mobile (100) et un autre émetteur/récepteur mobile.

3. Appareil (10) selon la revendication 1, comprenant en outre des moyens pour composer un paquet de données de transaction, le paquet de données de transaction comprenant des paquets de données de l'application et des informations contextuelles.

4. Appareil (20) pour un émetteur/récepteur de station de base (200) dans un système de communication mobile (500), le système de communication mobile (500) comprenant en outre un émetteur/récepteur mobile (100), l'appareil (20) comprenant

des moyens pour recevoir (22) des paquets de données associés à une application qui est exécutée sur l'émetteur/récepteur mobile (100) ;

des moyens pour obtenir (24) des informations contextuelles sur les paquets de données associés à l'application, les informations contextuelles comprenant des informations indiquant si l'application est actuellement affichée au premier plan ou en arrière-plan ; et

des moyens pour ordonnancer (26) l'émetteur/récepteur mobile (100) pour la transmission des paquets de données en se basant sur les informations contextuelles.

5. Appareil (20) selon la revendication 4, avec lequel les moyens pour obtenir (24) sont adaptés pour obtenir les informations contextuelles en inspectant les paquets de données, en recevant des informations contextuelles de la part de l'émetteur/récepteur mobile (100) ou en recevant les informations contextuelles de la part d'un serveur de données (300), et avec lequel les informations contextuelles comprennent un ou plusieurs éléments du groupe incluant des informations sur une exigence de qualité de service de l'application, des informations de priorité des paquets de données associés à l'application, des informations sur une unité d'une pluralité des paquets de données de l'application, des informations sur une demande de charge de l'application, des informations sur une contrainte de retard ou de taux d'erreurs de l'application, des informations sur un état de fenêtre, des informations sur une consommation de mémoire, des informations sur une utilisation du processeur par l'application exécutée sur l'émetteur/récepteur mobile (100), des informations sur un emplacement, une vitesse, une orientation actuels de l'émetteur/récepteur mobile (100), ou une distance entre l'émetteur/récepteur mobile (100) et un autre émetteur/récepteur mobile, et avec lequel les moyens pour ordonnancer (26) sont adaptés pour ordonnancer l'émetteur/récepteur mobile (100) pour la transmission de telle sorte que l'exigence de qualité pour la pluralité de paquets de données à laquelle se réfèrent les informations sur l'unité soit satisfaite.

6. Appareil (20) selon la revendication 4, avec lequel les moyens pour ordonnancer (26) sont adaptés pour déterminer une séquence de transmission d'une pluralité de transactions, un paquet de données de transaction comprenant des paquets de données de l'application et des informations contextuelles, une transaction étant une pluralité de paquets de données pour lesquelles les informations contextuelles indiquent l'unité et la pluralité de transaction se référant à une pluralité d'applications qui sont exécutées par un ou plusieurs émetteurs/récepteurs mobiles (100), l'ordre de la séquence des transactions se basant sur une fonction utilitaire, la fonction utilitaire dépendant d'un temps d'achèvement d'une transaction, lequel est déterminé en se basant sur les informations contextuelles.

**7.** Appareil (20) selon la revendication 6, avec lequel la séquence de transmission est déterminée à partir d'une itération de multiples séquences de transactions différentes, les multiples séquences différentes correspondant à différentes permutations de la pluralité de transactions, les moyens pour ordonnancer (26) étant adaptés pour déterminer la fonction utilitaire pour chacune des multiples séquences différentes et étant en outre adaptés pour sélectionner la séquence de transmission parmi les multiples séquences différentes correspondant à la fonction utilitaire maximale, et/ou les moyens pour ordonnancer (26) étant adaptés pour modifier encore plus la séquence de transmission en se basant sur le débit de données pouvant être pris en charge pour chaque transaction.

**8.** Appareil (30) pour un serveur de données (300), le serveur de données (300) communiquant des paquets de données associés à une application qui est exécutée sur un émetteur/récepteur mobile (100) à travers un système de communication mobile (500) vers l'émetteur/récepteur mobile (100), l'appareil (30) comprenant ;
des moyens (32) pour dériver des informations contextuelles des paquets de données, les informations contextuelles comprenant des informations indiquant si l'application est actuellement affichée au premier plan ou en arrière-plan ; et
des moyens (34) pour transmettre les informations contextuelles conjointement avec les paquets de données au système de communication mobile (500) pour ordonnancer l'émetteur/récepteur mobile en se basant sur les informations contextuelles.

**9.** Appareil (30) selon la revendication 8, avec lequel les informations contextuelles comprennent un ou plusieurs éléments du groupe incluant des informations sur une exigence de qualité de service de l'application, des informations de priorité des paquets de données associés à l'application, des informations sur une unité d'une pluralité des paquets de données de l'application, des informations sur une demande de charge de l'application, des informations sur une contrainte de retard ou de taux d'erreurs de l'application, des informations sur un état de fenêtre, des informations sur une consommation de mémoire, des informations sur une utilisation du processeur par l'application exécutée sur l'émetteur/récepteur mobile (100), des informations sur un emplacement, une vitesse, une orientation actuels de l'émetteur/récepteur mobile (100), ou une distance entre l'émetteur/récepteur mobile (100) et un autre émetteur/récepteur mobile, et avec lequel les moyens pour dériver (32) sont adaptés pour extraire les informations contextuelles d'un système d'exploitation sur le serveur de données (300) ou de l'application qui est exécutée sur le serveur de données (300).

**10.** Appareil (30) selon la revendication 8, comprenant en outre des moyens pour composer un paquet de données de transaction, le paquet de données de transaction comprenant des paquets de données de l'application et des informations contextuelles.

**11.** Procédé pour un émetteur/récepteur mobile (100) dans un système de communication mobile (500), le système de communication mobile (500) comprenant en outre un émetteur/récepteur de station de base (200), le procédé comprenant
extraction (712) d'informations contextuelles d'une application qui est exécutée sur l'émetteur/récepteur mobile (100), d'informations contextuelles d'un système d'exploitation qui est exécuté sur l'émetteur/récepteur mobile (100), ou d'informations contextuelles de pilotes de matériel ou de matériels de l'émetteur/récepteur mobile (100), les informations contextuelles comprenant des informations sur un état de l'application et/ou des informations sur un état de l'émetteur/récepteur mobile (100), les informations contextuelles comprenant des informations indiquant si l'application est actuellement affichée au premier plan ou en arrière-plan ;
communication (714) de paquets de données associés à l'application avec un serveur de données (300) à travers l'émetteur/récepteur de station de base (200) ; et
fourniture (716) des informations contextuelles à l'émetteur/récepteur de station de base (200) afin d'ordonnancer les paquets de données vers l'émetteur/récepteur mobile (100).

**12.** Procédé pour un émetteur/récepteur de station de base (200) dans un système de communication mobile (500), le système de communication mobile (500) comprenant en outre un émetteur/récepteur mobile (100), le procédé comprenant
réception (722) de paquets de données associés à une application qui est exécutée sur l'émetteur/récepteur mobile (100) ;
obtention (724) d'informations contextuelles sur les paquets de données associés à l'application, les informations contextuelles comprenant des informations indiquant si l'application est actuellement affichée au premier plan ou en arrière-plan ; et
ordonnancement (726) de l'émetteur/récepteur mobile (100) pour la transmission des paquets de données en se basant sur les informations contextuelles.

**13.** Procédé pour un serveur de données (300), le serveur de données (300) communiquant des paquets de données associés à une application qui est exécutée sur un émetteur/récepteur mobile (100) à travers un système de communication mobile (500) vers l'émetteur/récepteur mobile (100), le procédé comprenant ; dérivation (732) d'informations contextuelles des paquets de données, les informations contextuelles comprenant des informations indiquant si l'application est actuellement affichée au premier plan ou en arriére-plan ; et transmission (734) des informations contextuelles conjointement avec les paquets de données au système de communication mobile (500) pour ordonnancer l'émetteur/récepteur mobile en se basant sur les informations contextuelles.

**14.** Système de communication mobile (500) comprenant un émetteur/récepteur mobile (100) comprenant l'appareil selon la revendication 1, un émetteur/récepteur de station de base (200) comprenant l'appareil (20) selon la revendication 4 et/ou un serveur de données (300) comprenant l'appareil (30) selon la revendication 8.

**15.** Produit de programme informatique possédant un code de programme pour mettre en oeuvre l'un des procédés selon les revendications 12, 13 ou 14 lorsque le code de programme est exécuté sur un ordinateur ou un processeur.

Fig. 1

Fig. 2

Fig. 3

14

Means
for
communicating

Means
for
extracting

Means
for
providing

12

16

10

Fig. 4

EP 2 530 988 B1

Fig. 5

Fig. 6

Fig. 7

Fig. 8

Fig. 9

Fig. 10

Transaction 1    $r_1$    $r_2$

Transaction 2    $r_3$    $r_4$    ?→    $r_5$

$t_1$    $t_2$    $t_3$    time

Fig. 11

Fig. 12

Fig. 13

Fig. 14

Fig. 15

```
        ┌─────────────────────┐
        │                     │
        │     Extracting      │
        │                     │
712     └─────────────────────┘
                  │
                  ▼
        ┌─────────────────────┐
        │                     │
        │   Communicating     │
        │                     │
714     └─────────────────────┘
                  │
                  ▼
        ┌─────────────────────┐
        │                     │
        │     Providing       │
        │                     │
716     └─────────────────────┘
```

Fig. 16

Fig. 17

732

Deriving

Transmitting

734

Fig. 18

**REFERENCES CITED IN THE DESCRIPTION**

**Non-patent literature cited in the description**

- **G. MAIER ; F. SCHNEIDER ; A. FELDMANN.** A First Look at Mobile Hand-held Device Traffic. *Proc. Int. Conference on Passive and Active Network Measurement (PAM '10),* April 2010
- **F. SCHNEIDER ; S. AGARWAL ; T. ALPCAN ; A. FELDMANN.** The New Web: Characterizing AJAX Traffic. *Proc. Int. Conference on Passive and Active Network Measurement,* April 2008
- **G. BIANCHI et al.** A Programmable MAC Framework for Utility-Based Adaptive Quality of Service Support. *IEEE JOURNAL ON SELECTED AREAS IN COMMUNICATIONS,* February 2000, vol. 18 (2
- **J. HUANG ; V. G. SUBRAMANIAN ; R. AGRAWAL ; R. A. BERRY.** Downlink Scheduling and Resource Allocation for OFDM Systems. *IEEE Trans. Wireless Commun.,* 2009, vol. 8, 288-296
- **WEN-HSING KUO ; WANJIUN LIAO.** Utility-based radio resource allocation for QoS traffic in wireless networks. *IEEE Tans. Wireless Commun.,* 2008, vol. 7, 2714-2722

- **S. SHAKKOTTAI ; A. L. STOLYAR.** Scheduling Algorithms for a Mixture of Real-Time and Non-Real-Time Data in HDR. *Proc. Int. Teletraffic Congress (ITC-17),* 2001
- **F. KELLY.** Charging and rate control for elastic traffic. *Euro. Trans. Telecomms.,* 1997, vol. 8, 33-37
- **G. BIANCHI ; A.T. CAMPBELL.** A programmable MAC framework for utility-based adaptive quality of service support. *IEEE Journal on Selected Areas in Commun.,* 2000, vol. 18, 244-255
- **WEN-HSING KUO ; WANJIUN LIAO.** Utility-based radio resource allocation for QoS traffic in wireless networks. *IEEE Trans. Wireless Commun.,* 2008, vol. 7, 2714-2722
- **J. NIELSEN.** *Website response times,* 2010, http://www.useit.com/alertbox/response-times.html